(19) Europäisches Patentamt
European Patent Office
Office européen des brevets

(11) **EP 4 354 689 A1**

(12) **EUROPEAN PATENT APPLICATION**
published in accordance with Art. 153(4) EPC

(43) Date of publication:
**17.04.2024 Bulletin 2024/16**

(21) Application number: **22819948.5**

(22) Date of filing: **14.04.2022**

(51) International Patent Classification (IPC):
*H02J 7/00* (2006.01)     *H02J 7/10* (2006.01)
*B60L 50/60* (2019.01)     *B60L 58/12* (2019.01)
*B60L 53/14* (2019.01)     *B60L 53/30* (2019.01)
*B60L 53/62* (2019.01)     *B60L 53/66* (2019.01)
*H01M 10/44* (2006.01)     *H01M 10/48* (2006.01)

(52) Cooperative Patent Classification (CPC):
**B60L 50/60; B60L 53/14; B60L 53/30; B60L 53/62;**
**B60L 53/66; B60L 58/12; H01M 10/44;**
**H01M 10/48; H02J 7/00; H02J 7/06**

(86) International application number:
**PCT/JP2022/017783**

(87) International publication number:
**WO 2022/259761 (15.12.2022 Gazette 2022/50)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **09.06.2021   JP 2021096845**

(71) Applicant: **Hitachi, Ltd.**
**Tokyo 100-8280 (JP)**

(72) Inventors:
• **NAKAO, Ryohhei**
  **Tokyo 100-8280 (JP)**
• **YAMAUCHI, Shin**
  **Tokyo 100-8280 (JP)**

(74) Representative: **Mewburn Ellis LLP**
**Aurora Building**
**Counterslip**
**Bristol BS1 6BX (GB)**

(54) **CHARGING CONTROL SYSTEM, CHARGING CONTROL METHOD, AND PROGRAM**

(57)     Provided is a charging control system and the like that control charging of a battery of a mobile vehicle on a charger side. A charging control system (100) includes a charging control means (1) that controls charging of a battery (21) of a vehicle (20) by a charger (10) based on a charging current command value or a charging power command value transmitted from the vehicle (20) to the charger (10). When a charging mode is constant-current charging or constant-power charging, the charging control means (1) makes a change in the output setting value of the charger (10) to change the charging current of the battery (21).

*FIG. 1*

**EP 4 354 689 A1**

**Description**

Technical Field

The present invention relates to a charging control system and the like.

Background Art

For reducing $CO_2$ emissions, motorization with batteries has been implemented on not only automobiles, and not only both manned and unmanned vehicles, but also water, land, and air mobile vehicles of all sorts (ships, non-electrified railway vehicles, aircrafts, flying objects, etc.). As a charging control system that controls charging of a battery, for example, a technique described in PTL 1 is known. That is, PTL 1 describes "... controlling a charging operation of the energy storage device so as to charge the energy storage device under a constant current or constant-power charging condition throughout a charging period from the start of charging until a predetermined charging completion condition is satisfied".

Citation List

Patent Literature

PTL 1: JP 2020-115715 A

Summary of Invention

Technical Problem

In the technique described in PTL 1, the energy storage device (battery) is charged under a constant-current charging condition, based on a constant charging current command value set on the vehicle side. That is, the technique described in PTL 1 is to control the charging current exclusively on the vehicle side, and it is difficult to control the charging current on the charger side.

Therefore, an object of the present invention is to provide a charging control system and the like that control charging of a battery of a mobile vehicle on a charger side.

Solution to Problem

In order to solve the problem described above, the present invention includes a charging control means that controls charging of a battery of a mobile vehicle by a charger, based on a charging current command value or a charging power command value transmitted from the mobile vehicle to the charger, and when a charging mode is constant-current charging or constant-power charging, the charging control means makes a change in an output setting value of the charger to change a charging current of the battery.

Advantageous Effects of Invention

According to the present invention, it is possible to provide a charging control system and the like that control charging of a battery of a mobile vehicle on a charger side.

Brief Description of Drawings

[FIG. 1] Fig. 1 is a configuration diagram including a charging control system according to a first embodiment.
[FIG. 2] Fig. 2 is a functional block diagram of a charging control means included in the charging control system according to the first embodiment.
[FIG. 3] Fig. 3 is a functional block diagram of a charging control unit included in the charging control means of the charging control system according to the first embodiment.
[FIG. 4] Fig. 4 is a flowchart of processing executed by the charging control means of the charging control system according to the first embodiment.
[FIG. 5] Fig. 5 is a time chart showing an example of constant-current constant-voltage charging by the charging control system according to the first embodiment.

[FIG. 6] Fig. 6 is a time chart showing behaviors of current and voltage in the charging control system according to the first embodiment.

[FIG. 7] Fig. 7 is an explanatory diagram showing a relationship between a state of charge (SOC) and an open circuit voltage (OCV) of a battery in the charging control system according to the first embodiment.

[FIG. 8] Fig. 8 is a functional block diagram of a charging control means included in a charging control system according to a second embodiment.

[FIG. 9] Fig. 9 is a functional block diagram of a charging control unit included in the charging control means of the charging control system according to the second embodiment.

[FIG. 10] Fig. 10 is a functional block diagram of a parameter table generation unit included in the charging control means of the charging control system according to the second embodiment.

[FIG. 11] Fig. 11 is an explanatory diagram of a voltage equivalent circuit model of a battery in the charging control system according to the second embodiment.

[FIG. 12] Fig. 12 is an explanatory diagram related to the internal resistance characteristic of the battery in the charging control system according to the second embodiment.

[FIG. 13] Fig. 13 is an explanatory diagram of a parameter table related to the battery in the charging control system according to the second embodiment.

[FIG. 14A] Fig. 14A is a flowchart of processing executed by the charging control means of the charging control system according to the second embodiment.

[FIG. 14B] Fig. 14B is a flowchart of the processing executed by the charging control means of the charging control system according to the second embodiment.

[FIG. 15] Fig. 15 is a time chart showing an example of constant-current constant-voltage charging by the charging control system according to the second embodiment.

[FIG. 16] Fig. 16 is a time chart showing behaviors of current and voltage in the charging control system according to the second embodiment.

[FIG. 17] Fig. 17 is a functional block diagram of a parameter table generation unit included in a charging control means of a charging control system according to a third embodiment.

[FIG. 18A] Fig. 18A is a flowchart of processing executed by the charging control means of the charging control system according to the third embodiment.

[FIG. 18B] Fig. 18B is a flowchart of the processing executed by the charging control means of the charging control system according to the third embodiment.

[FIG. 19] Fig. 19 is a time chart showing a first charging pattern for specifying voltage model parameters in the charging control system according to the third embodiment.

[FIG. 20] Fig. 20 is a time chart showing a second charging pattern for specifying temperature model parameters in the charging control system according to the third embodiment.

[FIG. 21] Fig. 21 is a time chart related to a battery temperature estimation method at the time of extracting temperature model parameters in the charging control system according to the third embodiment.

[FIG. 22] Fig. 22 is a configuration diagram including a charging control system according to a fourth embodiment.

[FIG. 23] Fig. 23 is a functional block diagram of a charging control means included in the charging control system according to the fourth embodiment.

[FIG. 24] Fig. 24 is a functional block diagram of a charging mode determination unit included in the charging control means of the charging control system according to the fourth embodiment.

[FIG. 25] Fig. 25 is an explanatory diagram related to a charging method for each of different types of vehicles in the charging control system according to the fourth embodiment.

[FIG. 26] Fig. 26 is an explanatory diagram showing an example of feature quantities of a charging pattern stored in a charging pattern storage unit of the charging control system according to the fourth embodiment.

[FIG. 27] Fig. 27 is a time chart of constant-current constant-voltage charging when the charger side is set to a high output setting in a first comparative example.

[FIG. 28] Fig. 28 is a time chart of constant-current constant-voltage charging when a charger side is set to a low output setting in a second comparative example.

Description of Embodiments

<<First Embodiments

<Configuration of Charging control System>

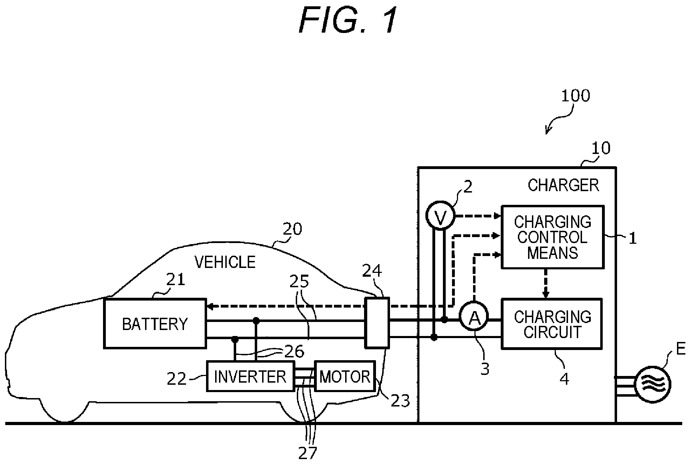

Fig. 1 is a configuration diagram including a charging control system 100 according to a first embodiment.

Of the lines connecting the configurations in Fig. 1, solid lines indicate power lines while dashed lines indicate signal lines. The charging control system 100 is a system that controls the charging of the battery 21 of the vehicle 20 (mobile vehicle). The charging control system 100 also has a function of estimating the state of health (SOH) and the like of the battery 21. Hereinafter, prior to the description of the charging control system 100, a vehicle 20 as an example of a mobile vehicle will be briefly described.

The vehicle 20 is a mobile vehicle on land that travels by electric power from the battery 21 or the like. Examples of such a vehicle 20 include an electric vehicle and a plug-in hybrid vehicle. As shown in Fig. 1, the vehicle 20 includes a battery 21, an inverter 22, a motor 23, and an insertion port 24 of a charging plug (not shown).

The battery 21 is a chargeable/dischargeable secondary battery. The battery 21 is connected to the insertion port 24 via wiring 25 and to the inverter 22 via (part of) the wiring 25 and wiring 26 sequentially.

The inverter 22 is a power converter that converts direct-current (DC) power into alternating-current (AC) power. That is, the inverter 22 converts DC power supplied from the battery 21 into AC power, and outputs the converted AC power to the motor 23. The motor 23 is a drive source of the vehicle 20 and is connected to the inverter 22 via wiring 27.

The insertion port 24 is a connection portion into which a charging plug (not shown) is inserted at the time of charging the battery 21. The battery 21 and the charger 10 are electrically connected by the insertion of the charging plug into the insertion port 24.

In addition to charging the battery 21, the charger 10 has a function of estimating the deterioration rate and the like of the battery 21. In the example of Fig. 1, the charging control system 100 includes the charger 10, but may further include one or a plurality of servers (not shown) capable of communicating with the charger 10.

As shown in Fig. 1, the charger 10 includes a charging control means 1, a voltage measurement means 2, a current measurement means 3, and a charging circuit 4, and operates by receiving power supply from a commercial power supply E (three-phase AC power supply). The voltage measurement means 2 measures the voltage of the battery 21. The current measurement means 3 measures a charging current supplied from the charging circuit 4 to the battery 21. The charging circuit 4 generates a charging current based on a current command input from the charging control means 1.

Although not shown, the charging control means 1 includes electronic circuits such as a central processing unit (CPU), a read-only memory (ROM), a random-access memory (RAM), and various interfaces as a hardware configuration. Then, a program stored in the ROM is read and developed in the RAM, and the CPU executes various processes. The charging control means 1 controls the charging of the battery 21 of the vehicle 20 by the charger 10 based on a charging current command value (or a charging power command value) transmitted from the vehicle 20 (mobile vehicle) to the charger 10. That is, the charging control means 1 generates a current command for charging, based on the measurement values of the voltage measurement means 2 and the current measurement means 3, in addition to the information received from the vehicle 20, and outputs the generated current command to the charging circuit 4. Note that processing executed by the charging control means 1 will be described later.

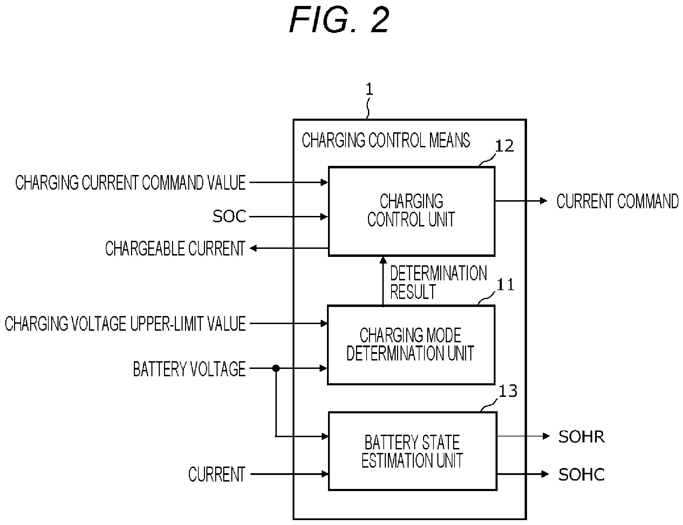

Fig. 2 is the functional block diagram of the charging control means 1.

As shown in Fig. 2, the charging control means 1 includes a charging mode determination unit 11, a charging control unit 12, and a battery state estimation unit 13. The charging mode determination unit 11 determines whether or not the charging mode of the vehicle 20 (cf. Fig. 1) is a constant-current charging mode. Here, the "constant-current charging mode" is a mode in which the battery 21 (cf. Fig. 1) is charged while a predetermined magnitude of the charging current is maintained. Hereinafter, the "constant-current charging mode" is also referred to as constant-current (CC) charging. For example, when the voltage of the battery 21 during charging is lower than a charging voltage upper-limit value received from the vehicle 20, the charging mode determination unit 11 determines that the current charging mode is CC charging. On the other hand, when the voltage of the battery 21 during charging is equal to the charging voltage upper-limit value, the charging mode determination unit 11 determines that the current charging mode is other than CC charging (or constant-power charging). Such a determination result is output from the charging mode determination unit 11 to the charging control unit 12.

As the charging mode other than CC charging, for example, a constant-voltage charging mode may be performed. Here, the "constant-voltage charging mode" is a mode in which charging is performed while a predetermined voltage of the battery 21 is maintained. Hereinafter, the "constant-voltage charging mode" is also referred to as constant-voltage (CV) charging. What kind of charging mode is performed is preset in the vehicle 20 (cf. Fig. 1).

The charging control unit 12 sets a chargeable current, based on the charging current command value received from the vehicle 20 (cf. Fig. 1) and the state of charge (SOC) of the battery 21, in addition to the determination result of the charging mode determination unit 11. Here, the "chargeable current" is an upper limit value of the charging current of the battery 21. The value of the chargeable current set by the charging control unit 12 is transmitted to the vehicle 20.

The battery state estimation unit 13 estimates a battery state, such as an internal resistance and a battery capacity of the battery 21, based on the voltage and the charging current of the battery 21 (cf. Fig. 1) during charging. Note that the internal resistance and battery capacity of the battery 21 change as the battery 21 deteriorates. Therefore, relative changes with respect to an internal resistance and a battery capacity of the battery 21 at the initial time are calculated based on the following equations (1) and (2).

$$SOHR\ [\%]\ =\ 100\ \times\ R1\ [m\Omega]/R0\ [m\Omega]...\ equation\ (1)$$

$$SOHC\ [\%]\ =\ 100\ \times\ Qmax1\ [Ah]/Qmax0\ [Ah]...\ equation\ (2)$$

Note that R1 included in equation (1) is the internal resistance of the battery 21 (cf. Fig. 1) at the time of charging, and R0 is the internal resistance of the battery 21 at the initial time. In addition, Qmax1 included in equation (2) is the battery capacity of the battery 21 at the time of charging, and Qmax0 is the battery capacity of the battery 21 at the initial time. Note that the internal resistance R0 and the battery capacity Qmax0 of the battery 21 at the initial time are assumed to be stored in advance in the charging control means 1. A method for calculating the internal resistance R1 and the battery capacity Qmax1 during the charging of the battery 21 will be described later.

As the battery 21 deteriorates, the internal resistance R1 included in equation (1) increases, so that an SOHR (rate of increase in internal resistance) increases. On the other hand, as the battery 21 deteriorates, the battery capacity Qmax1 included in equation (2) decreases, so that an SOHC (rate of reduction in battery capacity) decreases. Note that the battery state data, such as SOHR and SOHC, is used, for example, when a management system (not shown) creates an operation plan for the vehicle 20.

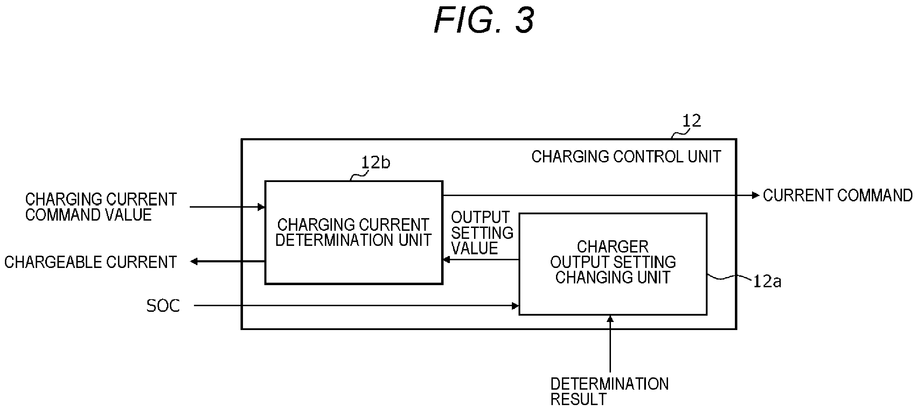

Fig. 3 is the functional block diagram of the charging control unit 12 included in the charging control means.

As shown in Fig. 3, the charging control unit 12 includes a charger output setting changing unit 12a and a charging current determination unit 12b. The charger output setting changing unit 12a determines whether or not a change in output setting in the charger 10 (cf. Fig. 1) is necessary based on the SOC (the state of charge of the battery 21) received from the vehicle 20, in addition to the determination result of the charging mode determination unit 11 (cf. Fig. 2).

Note that the "change in output setting" in the charger 10 means changing the output (power) setting value of the charger 10. As candidates for the output setting value of the charger 10, a plurality of values with different magnitudes (e.g., 45 [kW], 30 [kW], and 0 [kW]) are stored in advance. The charger output setting changing unit 12a outputs, to the charging current determination unit 12b, a new output setting value based on the determination result on whether or not a change in output setting is necessary.

The charging current determination unit 12b determines the chargeable current in the charger 10 (cf. Fig. 1) based on the output setting value from the charger output setting changing unit 12a. Specifically, the charging current determination unit 12b makes the chargeable current larger as the output setting value of the charger 10 is larger. The value of the chargeable current determined in this manner is transmitted from the charging current determination unit 12b to the vehicle 20 (cf. Fig. 1).

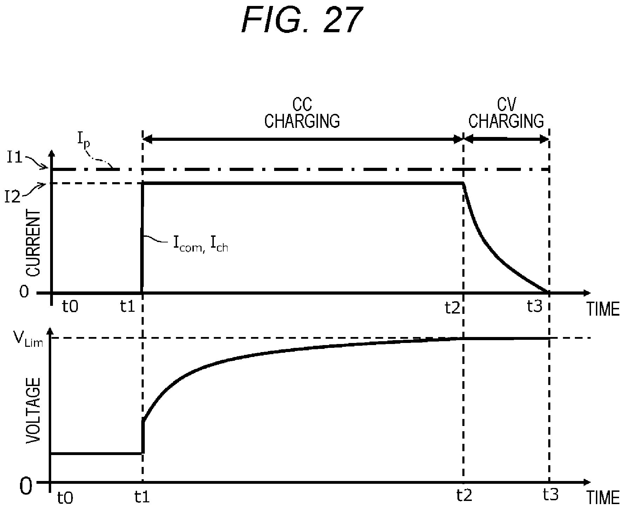

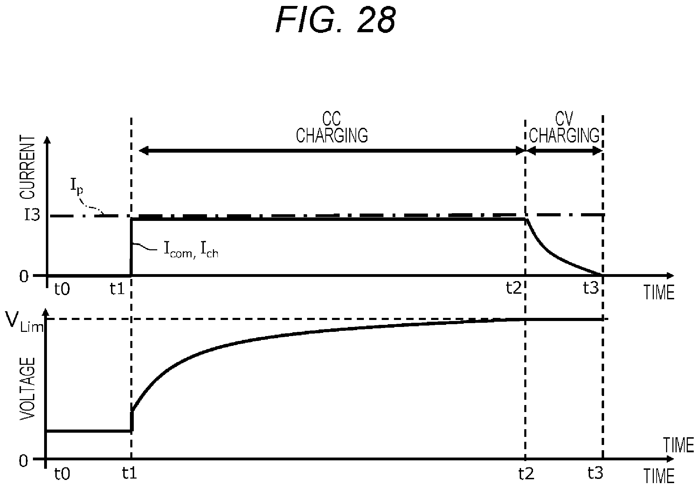

Next, a comparative example when the chargeable current is maintained constant during CC charging will be briefly described with reference to Figs. 27 and 28.

Fig. 27 is a time chart of constant-current constant-voltage charging when the charger side is set to a high output setting in the first comparative example (cf. Fig. 1 as appropriate).

Note that the horizontal axis in Fig. 27 represents time. The vertical axis in Fig. 27 represents, from the top of the paper, the charging current flowing through the battery 21 and the voltage of the battery 21. Fig. 27 shows waveforms of current and voltage in so-called constant-current constant-voltage charging (CCCV charging) (the same applies to the next drawing of Fig. 28). In the CCCV charging, after CC charging is performed until the voltage of the battery 21 reaches a predetermined charging voltage upper-limit value, CV charging is performed while the voltage of the battery 21 is maintained.

In the example of Fig. 27, during a CC charging period (time t1 to t2), a value I2 of a charging current command value $I_{com}$ transmitted from the vehicle 20 is smaller than a value I1 of a chargeable current $I_p$ based on the output setting value of the charger 10. Therefore, during CC charging, the charging current command value $I_{com}$ is set as a current command in the charger 10, and a charging current $I_{ch}$ based on this current command is supplied to the battery 21.

Fig. 28 is a time chart of constant-current constant-voltage charging when the charger side is set to a low output setting in the second comparative example.

In Fig. 28, since the charger 10 is in the low output setting, the chargeable current $I_p$ is smaller than that in Fig. 27. In the vehicle 20, the charging current command value $I_{com}$ is set based on the chargeable current $I_p$ from the charger 10, but since the chargeable current $I_p$ is relatively small, the charging current command value $I_{com}$ cannot be a value as large as that shown in Fig. 27. As a result, during the CC charging period (time t1 to t2), the charging current command value $I_{com}$ with a magnitude equal to the chargeable current $I_p$ is set, and the actual charging current $I_{ch}$ is also equal to the chargeable current $I_p$. That is, when the chargeable current $I_p$ is kept low, the charging current command value $I_{com}$ set in the vehicle 20, so to speak, hits its head at the chargeable current $I_p$ and is forcibly kept low.

However, in both of Figs. 27 and 28, the charging current $I_{ch}$ does not change and is constant during CC charging. In contrast, in the first embodiment, the charger 10 (cf. Fig. 1) makes a change in the output setting value midway through the CC charging, whereby a change in the charging current command value $I_{com}$ from the vehicle 20 is forcibly made to change the actual charging current $I_{ch}$. Then, the charging control means 1 (cf. Fig. 2) estimates the SOHR and SOHC, based on the change amounts of the charging current and the voltage of the battery 21 during CC charging. This is one of the main features of the first embodiment.

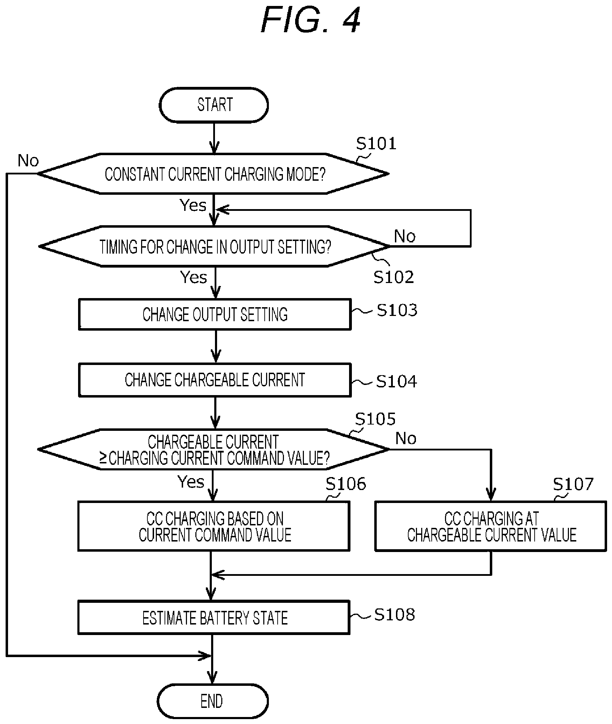

Fig. 4 is a flowchart of processing executed by the charging control means. The processing by the charging control means 1 will be described with reference to Fig. 4 (cf. Figs. 1 and 2 as appropriate.).

Note that charging is assumed to be started at "START" in Fig. 4.

In step S101, the charging control means 1 determines whether or not the current charging mode is the constant-current charging mode (CC charging) by the charging mode determination unit 11 (cf. Fig. 2). That is, the charging control means 1 determines that the current charging mode is constant-current charging (or constant-power charging) when the voltage of the battery 21 during charging is lower than the charging voltage upper-limit value transmitted from the vehicle 20 (mobile vehicle) to the charger 10.

In step S101, when the current charging mode is the constant-current charging mode (S101: YES), the processing by the charging control means 1 proceeds to step S102. On the other hand, in step S101, when the current charging mode is not the constant-current charging mode (S101: NO), although omitted in Fig. 4, the charging control means 1 charges the battery 21 in a predetermined charging mode (e.g., CV charging) other than the constant-current charging mode.

In step S102, the charging control means 1 determines whether or not it is a timing for a change in output setting. For example, when the SOC of the battery 21 reaches a predetermined value, the charging control means 1 determines that it is the timing for the change in output setting. The predetermined value is a threshold of the SOC to serve as a criterion for determining whether or not to change the output setting and is preset. In step S102, when it is the timing for the change in output setting (S102: YES), the processing by the charging control means 1 proceeds to step S103. On the other hand, in step S102, when it is not the timing for the change in output setting (S102: NO), the charging control means 1 repeats the determination process of step S102 while continuing the charging in the constant-current charging mode until then.

Next, in step S103, the charging control means 1 changes the output setting of the charger 10 by the charger output setting changing unit 12a (cf. Fig. 3). For example, the charging control means 1 lowers the output setting of the charger 10 midway through the constant-current charging mode.

In step S104, the charging control means 1 changes the chargeable current by the charging current determination unit 12b (cf. Fig. 3). For example, the charging control means 1 makes the chargeable current in the charger 10 smaller than the charging current command value received from the vehicle 20 immediately before the change in the chargeable current. Note that the changed value of the chargeable current is transmitted from the charger 10 to the vehicle 20. Then, the vehicle 20 resets the charging current command value so as to be equal to or less than the changed chargeable current. The new charging current command value reset in this manner is transmitted from the vehicle 20 to the charger 10.

Next, in step S105, the charging control means 1 determines whether or not the new charging current command value from the vehicle 20 is equal to or less than the chargeable current of the charger 10. When the new charging current command value is equal to or less than the chargeable current (S105: YES), the processing by the charging control means 1 proceeds to step S106. In step S106, the charging control means 1 performs CC charging, based on the changed charging current command value. As a result, the charging current can be changed midway through the CC charging.

As described above, when the charging mode is constant-current charging (or constant-power charging) (S101: YES), the charging control means 1 makes a change in the output setting value of the charger 10 (S103) to change the charging current of the battery 21. As a result, the charging current changes from the constant state, the state (SOHR and SOHC) of the battery 21 can be estimated with high accuracy based on a current change $\Delta I$ and a voltage change $\Delta V$.

On the other hand, in step S105, when the charging current command value is larger than the chargeable current (S105: NO), the processing by the charging control means 1 proceeds to step S107. As described above, the charging current command value is normally reset on the vehicle 20 side so as to be equal to or less than the chargeable current, but this resetting is not performed in some rare cases. In step S107, the charging control means 1 performs CC charging at the value of the chargeable current. That is, the charging control means 1 performs CC charging so that the actual charging current is equal to the changed chargeable current. After the process of step S106 or S107 is performed, the processing by the charging control means 1 proceeds to step S108.

In step S108, the charging control means 1 estimates the state (SOHR and SOHC) of the battery 21 by the battery state estimation unit 13 (cf. Fig. 2). Note that the details of the process of step S108 will be described later. Although omitted in Fig. 4, the CC charging of the battery 21 is continued, for example, until the voltage of the battery 21 reaches a predetermined charging voltage upper-limit value.

Note that the charging control means 1 preferably does not make a change in the chargeable current midway through a charging mode such as CV charging, where the charging current continuously changes (i.e., the charging current command value from the vehicle 20 continuously changes). This is because, in a pattern such as CV charging, where the current value continuously changes, the behavior of the internal resistance during energization becomes complicated, and the pattern may not be suitable for estimating the state of the battery 21. This is also because, when the chargeable current is suddenly changed midway through the CV charging or the like, a problem may occur in the charging control in the vehicle 20, which is meticulously controlling the charging current so that the voltage of the battery 21 does not deviate from the charging voltage upper-limit value.

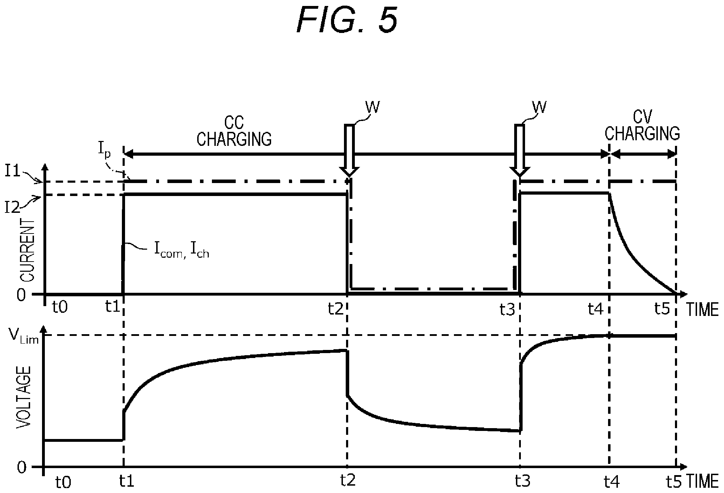

Fig. 5 is a time chart showing an example of constant-current constant-voltage charging in the first embodiment (cf. Figs. 1 and 2 as appropriate.).

Note that the horizontal axis in Fig. 5 represents time. The vertical axis in Fig. 5 represents, from the top of the paper, the charging current flowing through the battery 21 and the voltage of the battery 21. Further, a downward white arrow W shown in Fig. 5 indicates a timing at which the output setting of the charger 10 is changed.

As shown in Fig. 5, during a period from time t1 at the start of charging to t2, the value I2 of the charging current command value $I_{com}$ transmitted from the vehicle 20 is smaller than the value I1 of the chargeable current $I_p$ based on the output setting value of the charger 10. Then, CC charging is performed so that the actual charging current $I_{ch}$ is equal to the charging current command value $I_{com}$.

When it is the timing for the change in output setting value (S102 in Fig. 4: YES), the charging control means 1 changes the output setting value of the charger 10 (white arrow W at time t2) . For example, the charging control means 1 lowers the output setting value of the charger 10 from a predetermined value to zero at a timing when the SOC of the battery 21 reaches 50%, and accordingly, lowers the chargeable current $I_p$ to zero. This value of the chargeable current $I_p$ is transmitted from the charger 10 to the vehicle 20.

In the vehicle 20, the charging current command value $I_{com}$ is changed based on the changed chargeable current $I_p$, and the changed charging current command value $I_{com}$ is transmitted to the charger 10. As shown in Fig. 5, when the chargeable current $I_p$ is zero, charging so that the charging current $I_{ch}$ exceeds zero is not allowed in the charger 10. Therefore, the charging current command value $I_{com}$ is changed from the value I2 to zero, and accordingly, the actual charging current $I_{ch}$ also decreases from the value I2 to zero. As described above, in the first embodiment, the charging current is forcibly changed midway through the CC charging.

Specifically, when the charging mode is constant-current charging (or constant-power charging), the charging control means 1 lowers the output setting value so that the chargeable current $I_p$ in the charger 10 is smaller than the charging current command value $I_{com}$ immediately before the change in the output setting value. Then, at time t3 when a predetermined time has elapsed from time t2, the charging control means 1 restores the output setting value of the charger 10 to the original value, and accordingly, restores the chargeable current $I_p$ to the value I1. That is, when the charging mode is constant-current charging (or constant-power charging), the charging control means 1 lowers the output setting value midway through the charging of the battery 21 and then increases the output setting value as the change in the output setting value of the charger 10. In the example of Fig. 5, the charging control means 1 switches from CC charging to CV charging at time t4 when the voltage of the battery 21 reaches the charging voltage upper-limit value $V_{Lim}$.

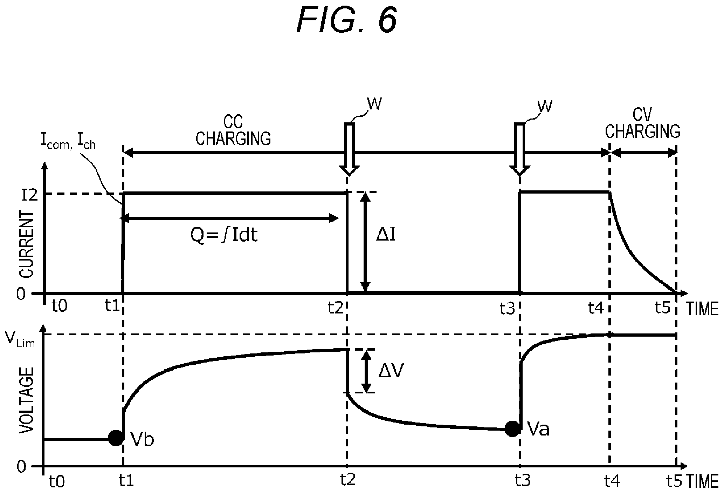

Fig. 6 is a time chart showing behaviors of current and voltage (cf. Figs. 1 and 2 as appropriate.).

Note that the way the charging current command value $I_{com}$, the charging current $I_{ch}$, and the voltage of the battery 21 change, shown in Fig. 6, is similar to that in Fig. 5. Although the chargeable current $I_p$ is omitted in Fig. 6, the chargeable current $I_p$ actually changes similarly to Fig. 5.

As shown in Fig. 6, a predetermined current change $\Delta I$ and a predetermined voltage change $\Delta V$ occur at a timing when the output setting of the charger 10 is changed (e.g., time t2). The battery state estimation unit 13 (cf. Fig. 2) calculates the internal resistance (= $\Delta V/\Delta I$) of the battery 21 based on the current change $\Delta I$ and the voltage change $\Delta V$. Then, as described above, the battery state estimation unit 13 calculates the SOHR of the battery 21 based on equation (1) including the internal resistance R1.

As shown in Fig. 6, it is desirable to change the charging current in a rectangular wave shape midway through the CC charging in terms of ensuring accuracy at the time of calculating the internal resistance R1 of the battery 21. In addition, since the internal resistance R1 of the battery 21 depends on the magnitude of the SOC, it is desirable to change the charging current when a predetermined SOC (e.g., SOC = 50 [%]), which has been preset, is reached, and to estimate the internal resistance R1 based on the current change $\Delta I$ and the voltage change $\Delta V$.

On the other hand, the SOHC included in the above equation (2) is calculated based on a current integration amount Q between time t1 and time t2, in addition to a voltage Vb of the battery 21 at the start of charging (time t1 in Fig. 6) and a voltage Va of the battery 21 at the change in the charging current (time t2).

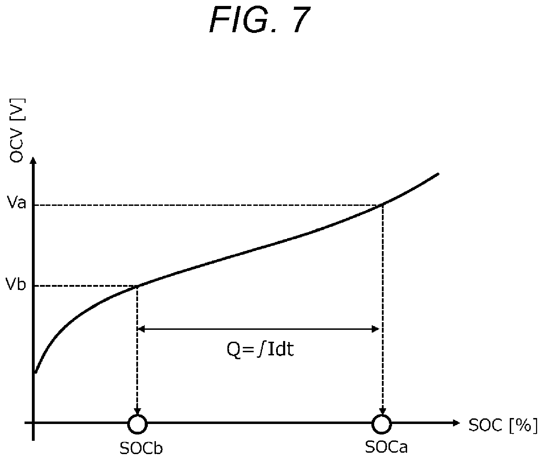

Fig. 7 is an explanatory diagram showing the relationship between the SOC and OCV of the battery.

Note that the horizontal axis in Fig. 7 represents the SOC of the battery 21 (cf. Fig. 1). The vertical axis in Fig. 7 represents the open circuit voltage (OCV) of the battery 21. Here, the OCV of the battery 21 is a stable voltage at no load when no current flows through the battery 21. As shown in Fig. 7, as the SOC of the battery 21 increases, the OCV also increases. Such a relationship between the SOC and OCV is stored in advance in the charging control means 1 in the form of a mathematical equation or a data table.

Based on the voltage Vb at the start of charging (cf. Fig. 6) and the stable voltage Va after charging is temporarily stopped (cf. Fig. 6), the battery state estimation unit 13 (cf. Fig. 2) specifies the SOC corresponding to each of the voltages Vb, Va. Specifically, the battery state estimation unit 13 calculates SOCb (cf. Fig. 7) corresponding to the voltage Vb at time t1 in Fig. 6 and SOCa (cf. Fig. 7) corresponding to the voltage Va at time t3. The relationship of the following equation (3) holds between the difference between SOCa and SOCb and the current integration amount Q (cf. Fig. 6). Thus, the battery capacity Qmax1 of the battery 21 is calculated based on equation (4) obtained by modifying equation (3). Based on this battery capacity Qmax1 and the initial battery capacity Qmax0, the SOHC of the battery 21 is calculated using equation (2) described above.

$$(SOCb - SOCa)/100 \times Qmax1 = Q... \text{ equation (3)}$$

$$Qmax1 = Q/((SOCb - SOCa)/100)... \text{ equation (4)}$$

Note that it is also possible to calculate the OCV of the battery 21 by subtracting the voltage change due to the internal resistance from the detection value of the voltage of the battery 21. However, in this method, an error may occur in the calculation of the OCV due to errors in the measurement of charging current and internal resistance, and as a result, an error may also occur in the battery capacity Qmax1. In contrast, in the first embodiment, after the change in the output setting of the charger 10, charging is stopped until the voltage of the battery 21 is stabilized, and the voltage corresponding to the OCV is used for the calculation of the SOHC. It is thereby possible to eliminate the influence of the error in the OCV caused by the errors in the charging current and the internal resistance. Therefore, the SOHC of the battery 21 can be calculated with high accuracy.

Although Fig. 6 shows an example in which the SOHR of the battery 21 is calculated based on the current change $\Delta I$ and the voltage change $\Delta V$ at the timing when the charging current $I_{ch}$ falls, the present invention is not limited thereto. For example, after the charging current of the battery 21 is set to zero, the battery state estimation unit 13 may calculate the SOHR of the battery 21 based on the current change $\Delta I$ and the voltage change $\Delta V$ at the timing when the charging current $I_{ch}$ rises at time t3.

<Effects>

According to the first embodiment, midway through the constant-current charging mode, the charging control means 1 changes the output setting of the charger 10 so that the chargeable current falls below the charging current command value (the value immediately before the change in output setting). This makes it possible to control the charging of the battery 21 on the charger 10 side. Since the charging current changes from the state of the constant current, the charging control means 1 can estimate the SOHR and SOHC of the battery 21 with high accuracy based on the current change $\Delta I$ and the voltage change $\Delta V$.

Further, for example, in an operation management system (not shown) that manages the vehicle 20 for distribution delivery, an operation plan is efficiently made in consideration of the time required for charging the battery 21, and the like. For this reason, the operation management system needs to grasp the remaining travelable distance of the vehicle 20, and it is important to perform charge management such as ensuring the amount of charge required for traveling on a scheduled delivery route.

Note that a battery state is also estimated by a battery management system (BMS) mounted on the vehicle 20, but this battery state often includes a predetermined error. One of the causes of such an error is that a change in the internal resistance or the like of the battery 21 varies depending on the charge/discharge pattern of the battery 21 (i.e., the traveling pattern of the vehicle 20). Thus, depending on the traveling route before charging, the accuracy of the battery state calculated by the BMS decreases, resulting in a decrease in the accuracy of calculating the remaining travelable distance of the vehicle 20 by the operation management system.

In contrast, in the first embodiment, as described above, the charger 10 forcibly changes the charging current midway through the CC charging period, so that the SOHR and SOHC of the battery 21 can be estimated with high accuracy. Therefore, for example, even when the vehicle 20 is used for distribution delivery, the remaining traveling distance and the like of the vehicle 20 can be accurately grasped in the operation management system (not shown).

<<Second Embodiments

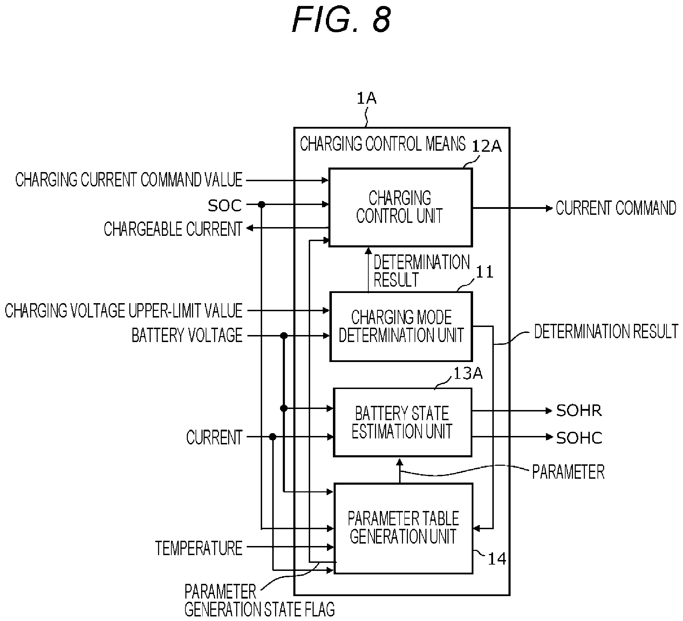

A second embodiment differs from the first embodiment in that a charging control means 1A (cf. Fig. 8) calculates a resistance component not depending on the energization time and a resistance component depending on the energization time with respect to the internal resistance of the battery 21 (cf. Fig. 1). Further, the second embodiment differs from the first embodiment in that the charging control means 1A (cf. Fig. 8) generates a predetermined parameter table. Note that the other points (the overall configuration of the charger 10, etc.: cf. Fig. 1) are similar to those of the first embodiment. Therefore, parts different from those of the first embodiment will be described, and description of overlapping parts will be omitted.

Fig. 8 is the functional block diagram of the charging control means 1A included in a charging control system according to the second embodiment.

As shown in Fig. 8, the charging control means 1A includes a charging mode determination unit 11, a charging control unit 12A, a battery state estimation unit 13A, and a parameter table generation unit 14. Note that the function of the charging mode determination unit 11 is similar to that of the first embodiment, and hence the description thereof will be omitted. The charging control unit 12A controls the charging of the battery 21 based on the determination result of the charging mode determination unit 11 and a parameter generation state flag input from the parameter table generation unit 14, in addition to the charging current command value and the SOC from the vehicle 20.

The battery state estimation unit 13A estimates a battery state, such as SOHR and SOHC, of the battery 21 based on the voltage and the charging current of the battery 21. Note that the internal resistance of the battery 21 includes a resistance component not depending on the energization time and a resistance component depending on the energization time. The magnitudes of these resistance components often become different values depending on the SOC or the temperature of the battery. Therefore, in the second embodiment, a parameter table is generated in which the resistance component depending on the energization time and the resistance component not depending on the energization time are associated with the SOC and the temperature of the battery 21.

The parameter table generation unit 14 generates a predetermined parameter table (database), based on the temperature of the battery 21 in addition to the voltage, the charging current, and the SOC of the battery 21. The parameter table generation unit 14 also has a function of setting a parameter generation state flag indicating a generation state (generation completion or incomplete) of the parameter table. Note that the details of the parameter table and the parameter generation state flag will be described later.

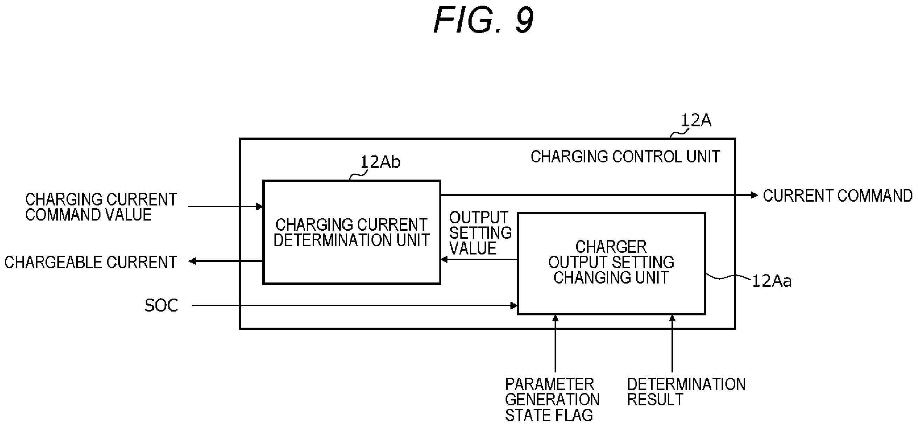

Fig. 9 is the functional block diagram of the charging control unit 12A included in the charging control means.

As shown in Fig. 9, the charging control unit 12A includes a charger output setting changing unit 12Aa and a charging current determination unit 12Ab. The charger output setting changing unit 12Aa changes the output setting of the charger 10 (cf. Fig. 1) based on the determination result of the charging mode determination unit 11 (cf. Fig. 8) and the parameter generation state flag from the parameter table generation unit 14 (cf. Fig. 8). Specifically, the charger output setting changing unit 12Aa changes the output setting of the charger 10 when the determination result of the charging mode determination unit 11 is CC charging, and the parameter generation state flag is "1" (the parameter table is not yet completed).

The charging current determination unit 12Ab determines the chargeable current, based on the output setting value input from the charger output setting changing unit 12Aa. Note that the processing of the charging current determination unit 12Ab is similar to that of the first embodiment, and hence the description thereof is omitted.

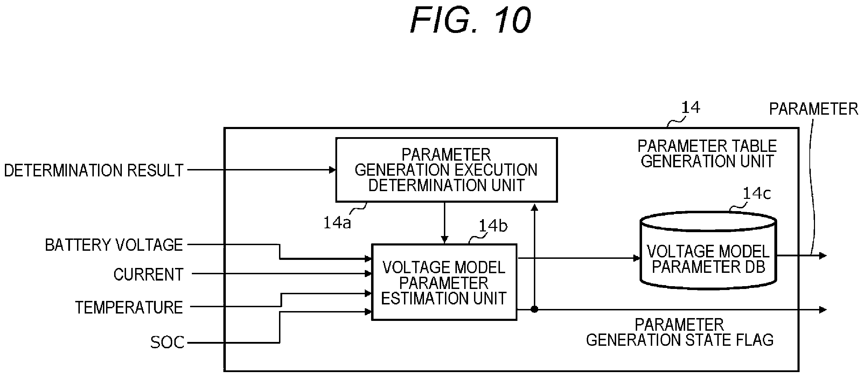

Fig. 10 is the functional block diagram of the parameter table generation unit 14 included in the charging control means.

As shown in Fig. 10, the parameters table generation unit 14 includes a parameter generation execution determination unit 14a, a voltage model parameter estimation unit 14b, and a voltage model parameter database 14c.

The parameter generation execution determination unit 14a determines whether it is necessary to generate voltage parameters, based on the determination result of the charging mode determination unit 11 (cf. Fig. 8) and the parameter generation state flag input from the voltage model parameter estimation unit 14b. The determination result of the parameter generation execution determination unit 14a is output to the voltage model parameter estimation unit 14b.

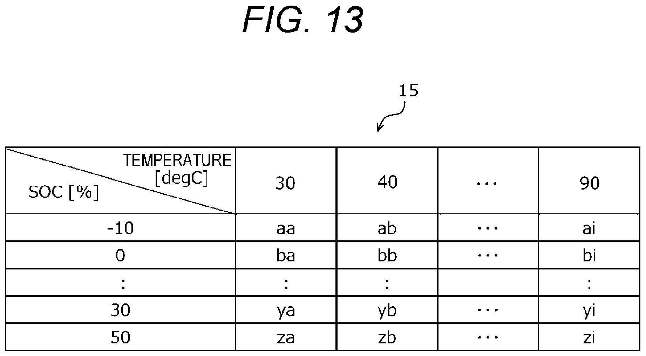

The voltage model parameter estimation unit 14b estimates predetermined voltage model parameters, based on the determination result of the parameter generation execution determination unit 14a, in addition to the voltage, the charging current, the temperature, and the SOC of the battery 21 (cf. Fig. 1). The estimation result of the voltage model parameter estimation unit 41b is stored into the voltage model parameter database 14c as a predetermined parameter table 15 (cf. Fig. 13). Further, the voltage model parameter estimation unit 14b outputs a parameter generation state flag indicating whether or not the generation of the voltage model parameters has been completed to the parameter generation execution determination unit 14a, and outputs the parameter generation state flag to the charger output setting changing unit 12Aa (cf. Fig. 9).

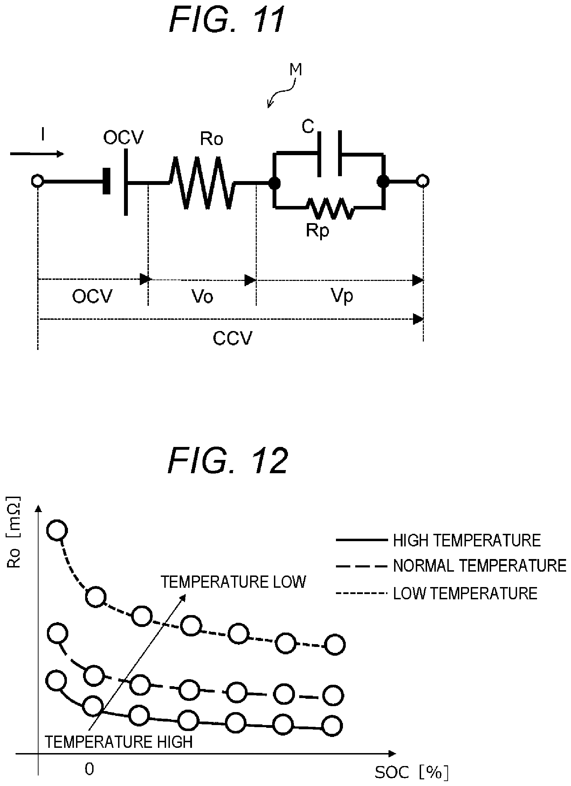

Fig. 11 is an explanatory diagram of a voltage equivalent circuit model M of the battery.

The voltage equivalent circuit model M shown in Fig. 11 is an equivalent circuit model in which the internal resistance of the battery 21 is simulated by a resistor in an electric circuit in order to reproduce a change in voltage of the battery 21 (cf. Fig. 1). The OCV included in the voltage equivalent circuit model M is the open circuit voltage of the battery 21.

In addition, Ro included in the voltage equivalent circuit model M is a resistance component not depending on the energization time in the internal resistance of the battery 21 (cf. Fig. 1). This resistance component Ro corresponds to the member resistance of the electrodes, the electrolyte, and other components of the battery 21. On the other hand, a parallel circuit of Rp and C included in the voltage equivalent circuit model M is a resistance component depending on the energization time in the internal resistance of the battery 21. This resistance component Rp corresponds to the internal resistance (polarization resistance) that causes a voltage change caused by an electrochemical reaction inside the battery 21 or a voltage change caused by diffusion of lithium ions.

Note that a time constant $\tau$ of the polarization phenomenon in the battery 21 (cf. Fig. 1) is represented by the product (Rp × C) of the resistance component Rp and the capacitance C. This time constant $\tau$ is also included in the parameters indicating the characteristics of the battery 21. The parameters (OCV, Ro, Rp, $\tau$) included in such a voltage equivalent circuit model M often have different values depending on the SOC or the temperature of the battery 21. An example thereof will be described with reference to Fig. 12.

Fig. 12 is an explanatory diagram related to the internal resistance characteristic of the battery.

Note that the horizontal axis in Fig. 12 represents the SOC of the battery 21 (cf. Fig. 1). The vertical axis in Fig. 12 represents the resistance component Ro not depending on the energization time in the battery 21. The resistance component Ro at each of high, normal, and low temperature zones is plotted for a plurality of SOCs with different magnitudes. As shown in Fig. 12, the resistance component Ro decreases as the temperature of the battery 21 increases, and the resistance component Ro decreases as the SOC of the battery 21 increases. Note that the resistance component Rp depending on the energization time and the time constant $\tau$ also have dependency on the SOC and the temperature of the battery 21.

Fig. 13 is an explanatory diagram of the parameter table 15 related to the battery voltage model parameters.

As described above, the resistance components Ro, Rp in the internal resistance and the time constant $\tau$ of the battery 21 (cf. Fig. 1) depend on the SOC and the temperature of the battery 21. Therefore, in the second embodiment, the parameter table generation unit 14 (cf. Fig. 10) generates the parameter table 15 in association with each SOC and each temperature of the battery 21. Note that "aa", "ba", and the like in Fig. 13 represent parameters (resistance components Ro, Rp, $\tau$, etc.) associated with the SOC and the temperature of the battery 21.

The OCV (open circuit voltage) included in the voltage equivalent circuit model M in Fig. 11 also changes depending on the SOC in the battery 21. Thus, for example, the parameter table generation unit 14 (cf. Fig. 8) extracts a state where the SOC of the battery 21 is 20% to a state where the SOC is 90% in increments of 10%, and calculates the OCV at each SOC. Note that the OCV may depend on the temperature depending on the constituent materials of the positive electrode and the negative electrode of the battery 21. In such a case, the parameter table generation unit 14 (cf. Fig. 10) generates a parameter table in which the OCV is associated with the SOC and the temperature of the battery 21.

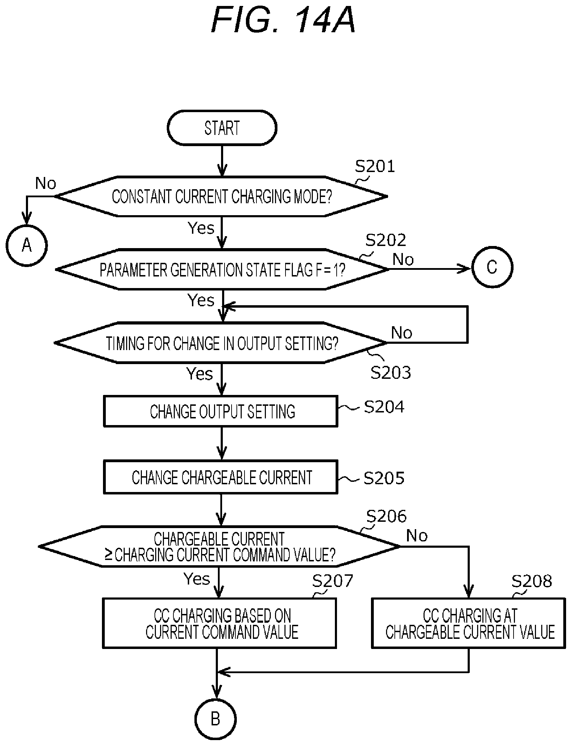

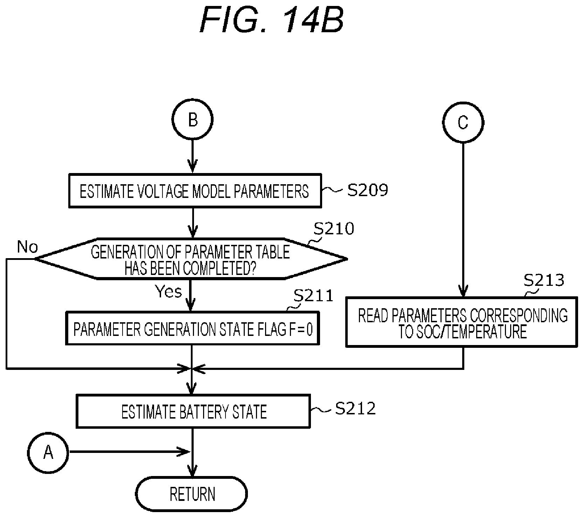

Figs. 14A and 14B are flowcharts of processing executed by the charging control means. The processing by the charging control means 1A will be described with reference to Figs. 14A and 14B (cf. Fig. 8 as appropriate.). Note that charging is assumed to be started at "START" in Fig. 14A.

In step S201, the charging control means 1A determines whether or not the current charging mode is the constant-current charging mode by the charging mode determination unit 11. When the current charging mode is the constant-current charging mode (S201: YES), the processing by the charging control means 1A proceeds to step S202. On the other hand, in step S201, when the current charging mode is not the constant-current charging mode (S201: NO), the processing by the charging control means 1A returns to "START" ("RETURN" in Fig. 14B). In this case, although omitted in Figs. 14A and 14B, the charging control means 1A charges the battery 21 in a predetermined charging mode other than CC charging.

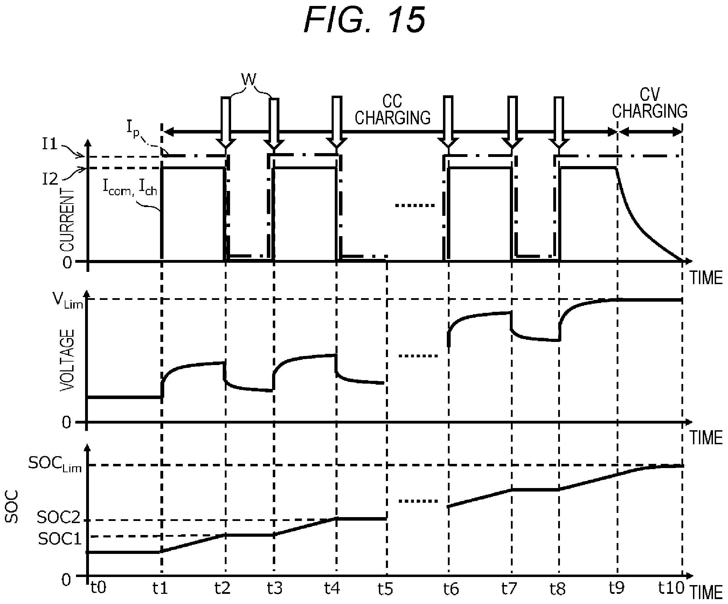

Next, in step S202, the charging control means 1A determines whether or not the value of the current parameter generation state flag is "1". When the value of the current parameter generation state flag is "1" (S202: YES), the processing by the charging control means 1A proceeds to step S203. Note that the processes of steps S203 to S208 is similar to the processes of steps S102 to S107 of the first embodiment (cf. Fig. 4). However, in the second embodiment, the charging control means 1A changes the chargeable current in a pulsed manner to increase the SOC of the battery 21 in stages (cf. also Fig. 15).

Next, in step S209 of Fig. 14B, the charging control means 1A estimates voltage model parameters (OCV, Ro, Rp, $\tau$). Note that a method for estimating the voltage model parameters will be described later.

In step S210, the charging control means 1A determines whether or not the generation of the parameter table 15 (cf. Fig. 13) has been completed. For example, in the parameter table 15, when data has been stored into every grid point prepared in advance, the charging control means 1A determines that the generation of the parameter table 15 has been completed. Even in a case where data has not been able to be stored into every grid point, for example, when each data is stored in a grid point corresponding to the temperature of the battery 21 at the start of charging, the charging control means 1A may set the parameter generation state flag to "0" as described later.

In step S210, when the generation of the parameter table 15 (cf. Fig. 13) is completed (S210: YES), the processing by the charging control means 1A proceeds to step S211.

In step S211, the charging control means 1A sets the value of the parameter generation state flag to "0". As described above, the parameter generation state flag is a flag indicating whether or not the generation of the parameter table 15 (cf. Fig. 13) has been completed. On the other hand, in step S210, when the generation of the parameter table 15 has not been completed (S210: NO), the charging control means 1A keeps the value of the parameter generation state flag at "1", and proceeds to the process of step S212.

In step S212, the charging control means 1A estimates the state of the battery 21. That is, the charging control means 1A estimates the SOHR and SOHC of the battery 21 based on the voltage model parameters (OCV, Ro, Rp, τ) estimated in step S209. When there is a temperature and an SOC of the battery 21 to serve as a reference at the time of calculating the SOHR and SOHC, the charging control means 1A estimates the state of the battery 21 at these temperature and SOC.

In step S202 of Fig. 14A, when the value of the parameter generation state flag is not "1" (S202: NO), the processing by the charging control means 1A proceeds to step S213 of Fig. 14B. That is, when the value of the parameter generation state flag is "0", and the generation of the parameter table 15 (cf. Fig. 13) has been completed, the processing by the charging control means 1A proceeds to step S213 of Fig. 14B. In step S213, the charging control means 1A refers to the parameter table 15 (cf. Fig. 13) and reads the parameters (OCV, Ro, Rp, τ) corresponding to the SOC and the temperature of the battery 21.

Next, in step S212, the charging control means 1A estimates the state of the battery 21. That is, the charging control means 1A estimates the SOHR and SOHC of the battery 21 based on the parameters (OCV, Ro, Rp, τ) described above. In this case, since the generation of the parameter table 15 (cf. Fig. 13) has already been completed (S210: YES), the charging control means 1A does not particularly need to change the output setting or the chargeable current of the battery 21. Hence the battery 21 can be charged in a relatively short time.

Next, calculation of parameters (OCV, Ro, Rp, τ) in a plurality of SOCs will be described with reference to Fig. 15.

Fig. 15 is a time chart showing an example of constant-current constant-voltage charging.

Note that the horizontal axis in Fig. 15 represents time. The vertical axis in Fig. 15 represents, from the top of the paper, the charging current flowing through the battery 21 (cf. Fig. 1), the voltage of the battery 21, and the SOC of the battery 21. Further, a downward white arrow W shown in Fig. 15 indicates a timing at which the output setting of the charger 10 (cf. Fig. 1) is changed.

As described above, the parameters (OCV, Ro, Rp, τ) in the voltage equivalent circuit model M (cf. Fig. 11) of the battery 21 have different values depending on the SOC of the battery 21. Therefore, for example, when the SOC of the battery 21 reaches a predetermined value preset in the parameter table 15 (cf. Fig. 13), the charging control means 1A (cf. Fig. 8) changes the output setting of the charger 10.

In the example of Fig. 15, when the SOC of the battery 21 reaches the predetermined value SOC1 (e.g., 30%), the charging control means 1A changes the output setting value to zero, and also changes the chargeable current $I_p$ to zero accordingly, to temporarily stop the charging of the battery 21 (time t2). Then, after a predetermined time (time t2 to t3) has elapsed, the charging control means 1A resets the output setting value to a value larger than zero to restart charging (time t3). In the example of Fig. 15, the value I1 of the chargeable current $I_p$ is larger than the value I2 of the charging current command value $I_{com}$ when charging is resumed.

Then, at a time point (time t4) when the SOC of the battery 21 reaches a predetermined value SOC2 (e.g., 50%), which is the next change timing, the charging control means 1A changes the output setting value of the charger 10 to zero again to temporarily stop charging. As described above, when the charging mode is constant-current charging (or constant-power charging), the charging control means 1A intermittently charges the battery 21. By repeating such processing, the charging control means 1A acquires detection values of the charging current and the voltage of the battery 21 at each SOC, and extracts each of parameters (OCV, Ro, Rp, τ) of the voltage equivalent circuit model M (cf. Fig. 11) .

As described above, a plurality of thresholds (SOC1, SOC2, etc. in Fig. 15) with different magnitudes are each preset as the state of charge of the battery 21. When the charging mode of the battery 21 is constant-current charging (or constant-power charging), the charging control means 1A changes the output setting value every time the SOC (state of charge) of the battery 21 reaches one of the plurality of thresholds, calculates at least one of state quantities that are the internal resistance value and the open circuit voltage of the battery, and associates the state quantity with the SOC of the battery 21.

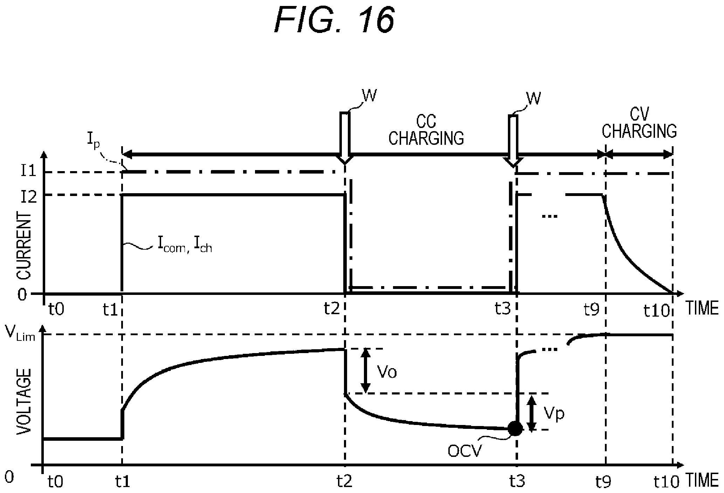

Fig. 16 is a time chart showing behaviors of current and voltage.

Note that the way the charging current command value $I_{com}$, the charging current $I_{ch}$, and the voltage of the battery 21 change in Fig. 16 is similar to that in Fig. 15. Although the chargeable current $I_p$ is omitted in Fig. 16, the chargeable current $I_p$ actually changes similarly to Fig. 15.

The charging control means 1A (cf. Fig. 8) detects the voltage drop Vo (cf. Fig. 11) caused by member resistance, and detects the voltage change Vp (cf. Fig. 11) caused by an electrochemical reaction or diffusion of lithium ions. Then, the charging control means 1A calculates the resistance components Ro, Rp based on the following equations (5) and (6). Note that the overall internal resistance of the battery 21 is represented by the sum of the resistance components Ro, Rp.

$$\texttt{Ro = Vo/I... equation (5)}$$

$$\texttt{Rp = Vp/I... equation (6)}$$

As described above, the charging control means 1A calculates, as the internal resistance value of the battery 21, the first resistance component Ro that changes depending on the energization time of the battery 21 and the second resistance component Rp not depending on the energization time of the battery 21.

The charging control means 1A calculates the time constant $\tau$, for example, as the time required for the voltage change Vp that has occurred up to a certain time point to decrease by about 63.2% after current interruption. Further, the charging control means 1A acquires a voltage after the suspension of charging (a voltage at time t3 in Fig. 16) as an OCV at a predetermined SOC. In this manner, the charging control means 1A calculates the parameters (OCV, Ro, Rp, $\tau$) of the voltage equivalent circuit model M (cf. Fig. 11) corresponding to each SOC.

Similarly, the charging control means 1A calculates parameters (OCV, Ro, Rp, $\tau$) corresponding to each temperature of the battery 21. Note that a plurality of thresholds with different magnitudes are assumed to be preset as the temperature of the battery 21. When the charging mode of the battery 21 is constant-current charging (or constant-power charging), the charging control means 1A changes the output setting value every time the temperature of the battery 21 reaches one of the plurality of thresholds, calculates at least one of state quantities that are the internal resistance value and the open circuit voltage of the battery 21, and associates the state quantity with the temperature of the battery 21.

Then, the charging control means 1A generates the parameter table 15 (cf. Fig. 13) by associating each parameter with the SOC and the temperature of the battery 21. Since it may be difficult to set the temperature of the battery 21 to a predetermined value, the internal resistance values of the battery 21 at a plurality of temperatures may be acquired in advance and linear interpolation may be performed. Then, a parameter corresponding to each preset temperature may be calculated.

Additionally, for example, the Arrhenius rule represented by the following equation (7) holds for the resistance components Ro, Rp of the internal resistance of the battery 21. Thus, the resistance components Ro, Rp of the battery 21 at each temperature may be calculated (interpolation or extrapolation based on linear interpolation is performed) based on equation (7).

$$\texttt{R = A × exp (-B/T)... equation (7)}$$

Here, R included in equation (7) is the internal resistance (resistance component Ro or Rp) of the battery 21. Further, A and B included in equation (7) are coefficients that are set based on a fitting that assumes equation (7) from the measured values of the temperature and the internal resistance of the battery 21.

In Fig. 16, the charging current command value of the vehicle 20 is assumed to immediately respond and change in a pulsed manner when the charging control means 1A makes a change in the output setting value, but the charging current command value may gradually decrease or increase without changing in a pulsed manner. In such a case, in addition to a statistical method such as multiple regression analysis, a parameter extraction method using a Kalman filter or the like may be applied instead of the equations (5) and (6) described above.

In the charging pattern of the second embodiment, charging is performed intermittently with a predetermined pause period interposed therebetween, and charging may take a relatively long time. Therefore, for example, while the application of the charging pattern shown in Figs. 15 and 16 is avoided during the day when the vehicle frequently performs charging and traveling, the charging pattern may be applied at the time of charging during the night.

The polarization resistance and the time constant of the battery 21 may vary depending on the temperature or the SOC of the battery 21. Thus, the time until the charging control means 1A may make a change in the time when the output setting value of the charger 10 is changed from zero to a predetermined value (e.g., time t2 to t3 in Figs. 15 and 16), based on the temperature or the SOC of the battery 21. Specifically, the time required to acquire the OCV when the output setting value of the charger 10 is set to zero (the time for the voltage to relax) tends to be longer as the temperature of the battery 21 is lower, and may be uniquely longer at a predetermined SOC.

Therefore, the charging control means 1A may extend the period until the output setting value of the charger 10 is changed from zero to a predetermined value as the temperature of the battery 21 is lower. In the range of the SOC where the time required to acquire the OCV is uniquely long when the output setting value is set to zero, the period until the output setting value is changed from zero to a predetermined value may be extended. As a result, the parameters of the voltage equivalent circuit model M (cf. Fig. 11) at each temperature and each SOC can be calculated with high accuracy.

As the battery 21 deteriorates, the internal resistance and the like also change. Therefore, after the generation of the parameter table 15 (cf. Fig. 13) is completed, the charging control means 1A may update the parameter table 15 at a timing when the SOHR changes to some extent.

The charger 10 or the operation management system (not shown) of the vehicle 20 may not be able to obtain information on the battery characteristics of the battery 21 in advance. In such a case, the initial battery characteristics of the battery 21 can be acquired by applying the charging pattern in Fig. 15 at a relatively early timing after the vehicle 20 to be managed starts operating. Further, the SOHR and SOHC of the battery 21 can be calculated with high accuracy based on the information of the parameter table 15 (cf. Fig. 13).

<Effects>

According to the second embodiment, the charging control means 1A individually extracts the resistance component Ro not depending on the energization time and the resistance component Rp depending on the energization time, thereby enabling the calculation of the internal resistance value (R = Ro + Rp) of the battery 21 with high accuracy. During CC charging, the charging control means 1A intermittently charges the battery 21, and calculates the parameters (OCV, Ro, Rp, τ) of the voltage equivalent circuit model M (cf. Fig. 11), based on a current change and a voltage change at a timing when the output setting of the charger 10 is changed. This makes it possible to generate the parameter table 15 (cf. Fig. 13) in which each parameter is associated with a plurality of preset SOC and temperatures.

When the battery 21 is charged after the completion of the parameter table 15, the charging control means 1A refers to the parameter table 15 (cf. Fig. 13) and reads parameters (OCV, Ro, Rp, τ) corresponding to the SOC and the temperature, enabling the estimation of the SOHR and SOHC of the battery 21 with high accuracy. In this case, it is not particularly necessary to change the charging current during CC charging, so that the charging of the battery 21 can be finished in a short time.

<<Third Embodiment>>

A third embodiment differs from the second embodiment in that the charging control means 1A (cf. Fig. 8) generates thermal model parameters used to predict the temperature rise of the battery 21, based on data acquired during charging of the battery 21. Further, the present embodiment differs from the second embodiment in that, the charging control means 1A (cf. Fig. 8) controls the charging current so as to inhibit the temperature rise of the battery 21 for the purpose of calculating the voltage model parameters before the completion of generation of the thermal model parameters.

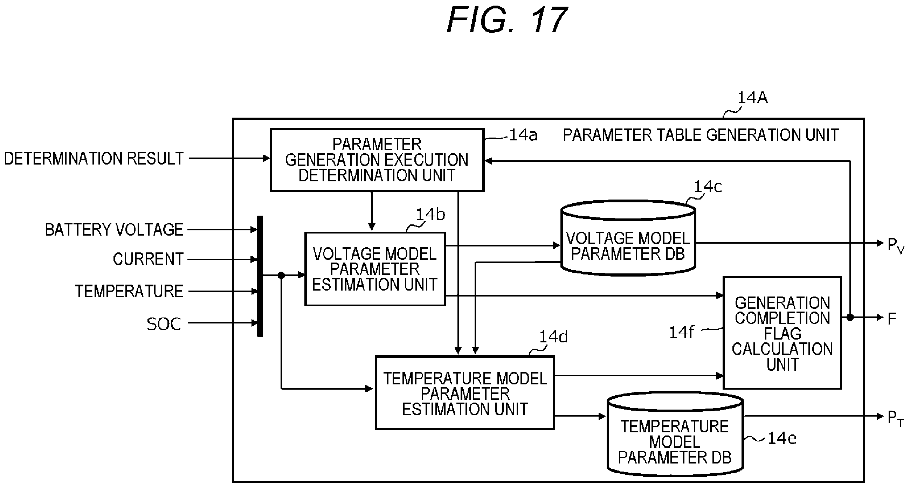

In the third embodiment, the charging control means 1A (cf. Fig. 8) includes a parameter table generation unit 14A shown in Fig. 17 instead of the parameter table generation unit 14 (cf. Figs. 8 and 10) described in the second embodiment. Note that other configurations are similar to those of the second embodiment. Therefore, parts different from those of the second embodiment will be described, and description of overlapping parts will be omitted.

Fig. 17 is the functional block diagram of the parameter table generation unit 14A included in the charging control means of the charging control system.

As shown in Fig. 17, the parameter table generation unit 14A includes a parameter generation execution determination unit 14a, a voltage model parameter estimation unit 14b, a voltage model parameter database 14c, a temperature model parameter estimation unit 14d, a temperature model parameter database 14e, and a generation completion flag calculation unit 14f.

The parameter generation execution determination unit 14a determines whether or not it is necessary to generate voltage model parameters and temperature model parameters during CC charging. The determination result of the parameter generation execution determination unit 14a is output to the voltage model parameter estimation unit 14b and also output to the temperature model parameter estimation unit 14d. Note that the voltage model parameter estimation unit 14b and the voltage model parameter database 14c are similar to those of the second embodiment (cf. Fig. 10), and hence the description thereof is omitted.

The temperature model parameter estimation unit 14d shown in Fig. 17 estimates the temperature model parameters, based on the charging current flowing through the battery 21, the temperature of the battery 21, the SOC, the determination result of the parameter generation execution determination unit, and the voltage model parameter (specifically, the OCV of the battery 21). The temperature model parameters are a heat capacity and a heat transfer coefficient of the battery 21, and are used for the temperature prediction of the battery 21 when a predetermined charging current flows. The estimation result of the temperature model parameter estimation unit 14d is stored into the temperature model parameter database 14e. Further, the temperature model parameter estimation unit 14d outputs, to the generation completion flag calculation unit 14f, a temperature parameter generation completion flag indicating whether the generation of the temperature model parameters has been completed.

The generation completion flag calculation unit 14f generates a parameter generation state flag, based on a voltage parameter generation completion flag and the temperature parameter generation completion flag. The parameter generation state flag generated in this manner is output to the charging control unit 12A (cf. Fig. 8). Note that the details of the parameter generation state flag will be described later.

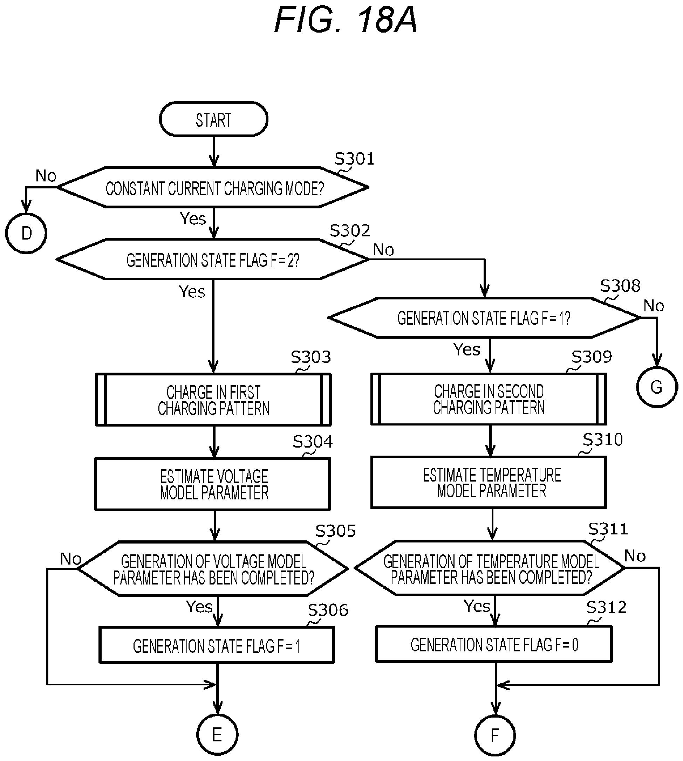

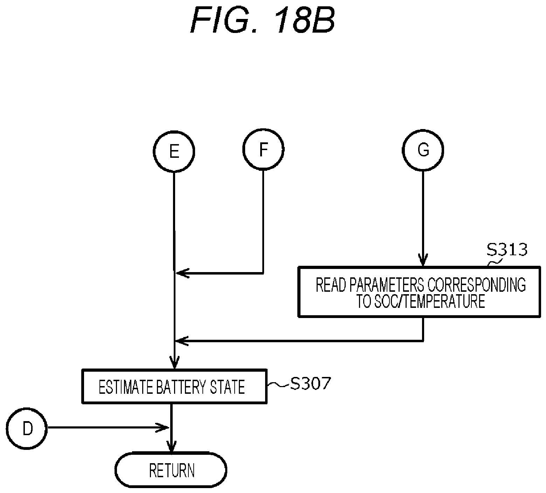

Figs. 18A and 18B are flowcharts of processing executed by the charging control means of the charging control system. The processing by the charging control means 1A will be described with reference to Figs. 18A and 18B (cf. Fig. 8 as appropriate.).

Note that charging is assumed to be started at "START" in Fig. 18A.

In step S301, the charging control means 1A determines whether or not the current charging mode is the constant-current charging mode. When the current charging mode is the constant-current charging mode (S301: YES), the processing by the charging control means 1A proceeds to step S302. On the other hand, when the current charging mode is not the constant-current charging mode (S301: NO), the processing by the charging control means 1A returns to "START" ("RETURN" in Fig. 18B). In this case, although omitted in Figs. 18A and 18B, the charging control means 1A charges the battery 21 in a predetermined charging mode other than the constant-current charging mode.

In step S302, the charging control means 1A determines whether or not the value of the current parameter generation state flag is "2". When the value of the current parameter generation state flag is "2" (S302: YES), the processing by the charging control means 1A proceeds to step S303. That is, when the generation of the voltage model parameters has not been completed, and furthermore, the generation of the temperature model parameters has not been completed, the processing by the charging control means 1A proceeds to step S303.

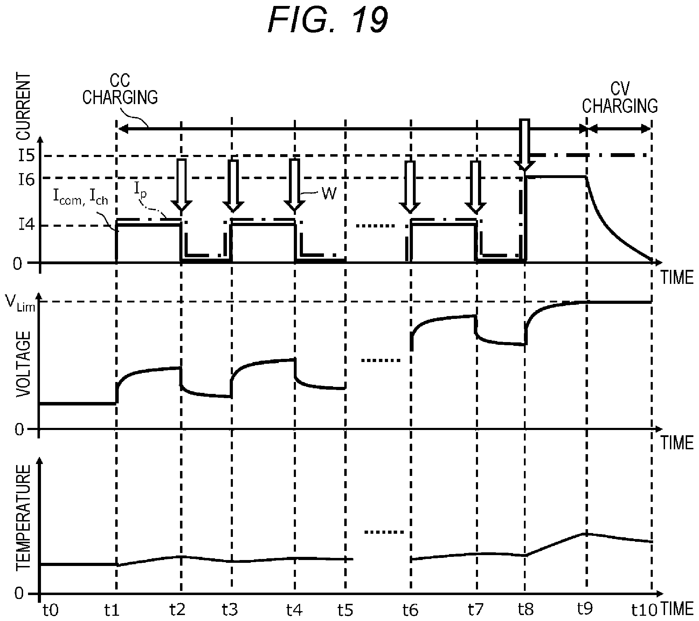

In step S303, the charging control means 1A charges the battery 21 in a first charging pattern. Here, the "first charging pattern" is a charging pattern for specifying voltage model parameters (OCV, Ro, Rp, $\tau$) of the battery 21. Note a specific process of step S303 is similar to those of steps S203 to S208 in Figs. 14A and 14B (second embodiment). The "first charging pattern" will be described with reference to Fig. 19.

Fig. 19 is a time chart showing the first charging pattern for specifying the voltage model parameters.

Note that the horizontal axis in Fig. 19 represents time. The vertical axis in Fig. 19 represents, from the top of the paper, the charging current flowing through the battery 21, the voltage of the battery 21, and the temperature of the battery 21. Further, a downward white arrow W shown in Fig. 19 indicates a timing at which the output setting of the charger 10 (cf. Fig. 1) is changed.

As described in the second embodiment, the voltage model parameters (OCV, Ro, Rp, $\tau$) often have different values depending on the temperature of the battery 21. The battery 21 is more likely to deteriorate as its temperature is higher, and it is thus desirable to inhibit a temperature rise during charging. Therefore, at the time of estimating the voltage model parameters, the charging control means 1A (cf. Fig. 8) sets the output setting value so that the charging current $I_{ch}$ during CC charging is relatively small. This inhibits the temperature rise of the battery 21 during charging (cf. "TEMPERATURE" in Fig. 19), whereby the accuracy at the time of estimating the voltage model parameters is enhanced, and the degradation of the battery 21 can be inhibited. The charging control means 1A adjusts the output setting value so that the charging current $I_{ch}$ is a relatively small value I4, while alternately repeating the charging stop and recharging during CC charging.

Returning to Fig. 18A again, the description will be continued.

After performing charging in the first charging pattern (cf. Fig. 19) in step S303, the charging control means 1A estimates voltage model parameters (OCV, Ro, Rp, $\tau$) in step S304. That is, the charging control means 1A generates the voltage model parameter database 14c (first database) including the open circuit voltage (OCV) and the internal resistance value (Ro, Rp) of the battery 21, based on the information including the charging current after the change in the output setting value of the charger 10 and the voltage of the battery 21. Note that the method for estimating the voltage model parameters is similar to that of the second embodiment, and hence the description thereof is omitted. The charging control means 1A stores the estimation result of the voltage model parameters into the voltage model parameter database 14c (cf. Fig. 17).

In step S305, the charging control means 1A determines whether or not the generation of the voltage model parameters has been completed. When the generation of the voltage model parameters has been completed (S305: YES), the processing by the charging control means 1A proceeds to step S306.

In step S306, the charging control means 1A sets the value of the parameter generation state flag to "1", and proceeds to the process of step S307 of Fig. 18B. On the other hand, in step S305, when the generation of the voltage model parameters has not been completed (S305: NO), the charging control means 1A maintains the parameter generation state flag at "2", and proceeds to step S307 of Fig. 18B.

In step S307, the charging control means 1A estimates the state of the battery 21. That is, the charging control means 1A calculates the SOHR and SOHC of the battery 21 based on the voltage model parameters (OCV, Ro, Rp, $\tau$) estimated in step S304. After the process of step S307 is performed, the processing by the charging control means 1A returns to "START" ("RETURN"). After the estimation of the voltage model parameters is completed, the temperature model parameters to be described next are generated at the time of subsequent charging (charging of the same type of battery).

In step S302 of Fig. 18A, when the value of the current parameter generation state flag is not "2" (S302: NO), the processing by the charging control means 1A proceeds to step S308.

In step S308, the charging control means 1A determines whether or not the value of the current parameter generation state flag is "1". When the value of the current parameter generation state flag is "1" (S308: YES), the processing by the charging control means 1A proceeds to step S309. That is, when the generation of the voltage model parameters has been completed while the generation of the temperature model parameters has not been completed, the processing by the charging control means 1A proceeds to step S309.

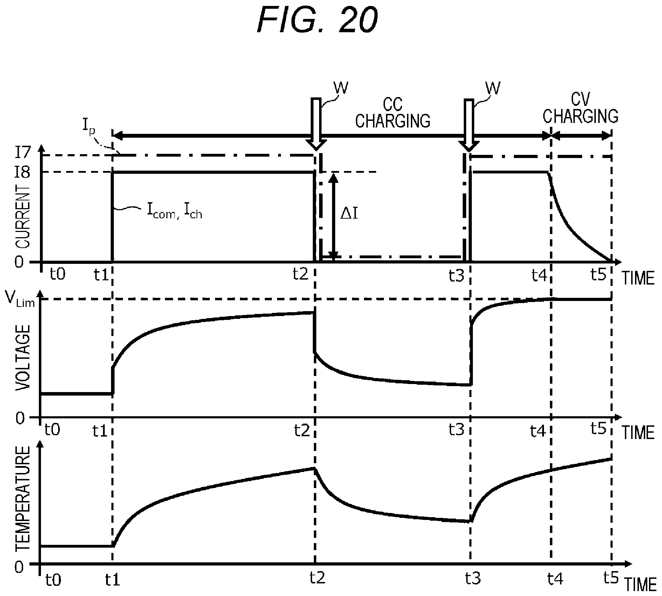

In step S309, the charging control means 1A performs charging in a second charging pattern. Here, the "second charging pattern" is a charging pattern for specifying the temperature model parameters of the battery 21. The second charging pattern will be described with reference to Fig. 20.

Fig. 20 is a time chart showing the second charging pattern for specifying the temperature model parameters.

In the example of Fig. 20, the output setting value and the chargeable current $I_p$ of the charger 10 are set so that the charging current $I_{ch}$ having a relatively large value I8 flows immediately after the start of CC charging. As described above, in order to calculate the temperature model parameters, the charging control means 1A intentionally allows a large charging current to flow to increase the temperature of the battery 21 (cf. "temperature" in Fig. 20) . Then, the chargeable current $I_p$ is lowered to zero at time t2, the charging of the battery 21 is temporarily stopped, and then the charging is resumed at time t3.

Returning to Fig. 18A again, the description will be continued.

After performing charging in the second charging pattern in step S309, the charging control means 1A estimates the temperature model parameters in step S310. Examples of such temperature model parameters include the heat capacity, which indicates how easily the temperature of the battery 21 changes, as well as a heat dissipation coefficient (a heat transfer coefficient, a parameter indicating a heat dissipation property), which indicates how easily the battery 21 dissipates heat at the time of calculating a heat dissipation amount proportional to the difference from the ambient temperature.

Specifically, the charging control means 1A changes the output setting value of the charger 10 at the time of charging the battery 21 again after generating the voltage model parameter database 14c (first database). Then, the charging control means 1A generates the temperature model parameter database 14e (second database) including at least one of the heat capacity of the battery 21 and the heat dissipation coefficient (the parameter indicating the heat dissipation property) of the battery based on the charging current after the change in the output setting value, the voltage of the battery 21, and the information in the voltage model parameter database 14c.

The charging current (value I4 in Fig. 19) when the output setting value is increased at the time of generating the voltage model parameter database 14c (first database) is preferably smaller than the charging current (value I8 in Fig. 20) when the output setting value is increased at the time of generating the temperature model parameter database 14e (second database). It is thereby possible to inhibit deterioration of the battery 21 due to a temperature rise during charging.

As shown in Fig. 20, when the relatively large value I8 flows, the temperature of the battery 21 greatly increases from time t1 to t2. The charging control means 1A calculates the temperature model parameters, based on the voltage, the temperature, and the SOC of the battery 21 in addition to the charging current of the battery 21, for example, using the temperature prediction equation of the following equation (8). In the calculation of the temperature model parameters, a Kalman filter or the like may be used in addition to a statistical method such as multiple regression analysis.

$$\mathrm{Tcell = Tcell0 + 1/HC \times (\int(CCV - OCV) \times Idt + HTC \times}$$

$$\mathrm{(Tcell - Tamb))... \; equation \; (8)}$$

Here, Tcell included in equation (8) is the temperature [°C] of the battery 21, Tcell0 is the initial temperature [°C] of the battery 21, and HC is the heat capacity [J/°C] of the battery 21. Further, CCV included in equation (8) is the measured voltage [V] of the battery 21, OCV is the open circuit voltage [V], and I is the current value [A] of the charging current flowing through the battery 21. In addition, HTC included in equation (8) is the heat transfer coefficient [J/°C] of the battery 21, and Tamb is the ambient temperature [°C] of the battery 21. Note that the initial temperature Tcell0 of the battery 21 at the start of charging may be used as the ambient temperature Tamb of the battery 21. The OCV included in the voltage model parameters is used as the OCV of equation (8) described above.

The charging control means 1A substitutes the measured voltage (CCV), the SOC, and the current value (I) of the battery 21, as well as the ambient temperature (Tamb), into equation (8), and calculates the heat capacity HC and the heat transfer coefficient HTC as values that enable the reproduction of the actual temperature Tcell of the battery 21.

After estimating the temperature model parameters in step S310 of Fig. 18A, the charging control means 1A determines in step S311 whether or not the generation of the temperature model parameters has been completed. When the generation of the temperature model parameters has been completed (S311: YES), the processing by the charging control means 1A proceeds to step S312.

In step S312, the charging control means 1A sets the value of the parameter generation state flag to "0", and proceeds to the process of step S307 of Fig. 18B. On the other hand, in step S312, when the generation of the temperature model parameters has not been completed (S312: NO), the charging control means 1A maintains the parameter generation state flag at "1", and proceeds to the process of step S307 of Fig. 18B.

In step S307, the charging control means 1A estimates the state of the battery 21. That is, the charging control means 1A calculates the SOHR and SOHC of the battery 21 based on the voltage model parameters (OCV, Ro, Rp, $\tau$).

In step S308 of Fig. 18A, when the value of the parameter generation state flag is not "1", the processing by the charging control means 1A proceeds to step S313 of Fig. 18B. That is, when the generation of the voltage model parameters and the temperature model parameters has been completed, and the value of the parameter generation state flag is "0", the processing by the charging control means 1A proceeds to step S313 of Fig. 18B.

In step S313, the charging control means 1A refers to the voltage model parameter database 14c (cf. Fig. 17), and reads parameters (OCV, Ro, Rp, $\tau$) corresponding to the SOC and the temperature of the battery 21.

Next, in step S307, the charging control means 1A estimates the state of the battery 21. Specifically, the charging control means 1A calculates the SOHR and SOHC of the battery 21 based on the parameters (OCV, Ro, Rp, $\tau$) described above. In this case, since the generation of the voltage model parameters and the temperature model parameters has already been completed, it is not particularly necessary to change the output setting or the chargeable current of the battery 21.

When estimating the state of the battery 21 after completing the generation of the temperature parameters, the charging control means 1A predicts the temperature of the battery 21 when a predetermined charging current flows, based on the temperature model parameters (the heat capacity and the heat dissipation coefficient of the battery 21). Then, for example, the charging control means 1A controls the charging current so that the temperature of the battery 21 does not exceed a predetermined value during charging. As a result, the deterioration of the battery 21 can be inhibited.

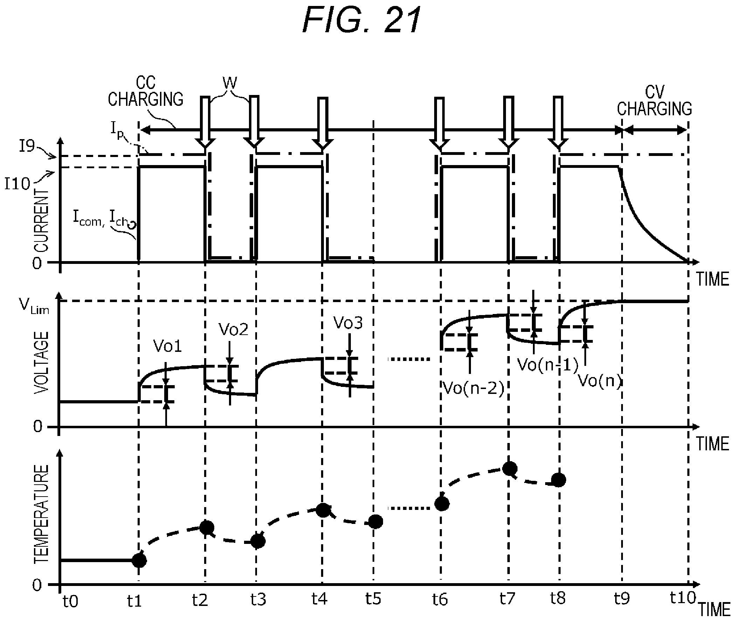

Note that the real-time temperature detection value of the battery 21 during charging may not be transmitted from the vehicle 20 to the charger 10. In such a case, as described below with reference to Fig. 21, the charging control means 1A stores in advance the relationship between the temperature and the internal resistance of the battery 21, and estimates the temperature of the battery 21 during charging based on the internal resistance of the battery 21.

Fig. 21 is a time chart related to a battery temperature estimation method at the time of extracting temperature model parameters.

Note that a database indicating the temperature dependency of the voltage model parameters is assumed to be stored in advance. The charging control means 1A detects voltage change amounts Vo1, Vo2, ..., V(n) of the battery 21 when the charging current changes (decreases or increases). Each of these change amounts of the voltage is a voltage drop caused by the resistance component Ro not depending on the energization time of the battery 21, and corresponds to the voltage Vo in Fig. 11. The charging control means 1A calculates the resistance component Ro by dividing the voltage Vo by the value of the charging current. Then, the charging control means 1A refers to the database indicating the temperature dependency of the voltage model parameters, and specifies the temperature associated with the resistance component Ro. In Fig. 21, the estimation result of the temperature of the battery 21 is indicated by dots. Although discrete as described above, the heat capacity (HC) and the heat transfer coefficient (HTC) of the battery 21 included in equation (8) can be estimated by estimating the temperature of the battery 21 from the resistance component Ro.

<Effects>

According to the third embodiment, the charging control means 1A calculates at least one of the heat capacity of the battery 21 and the parameter (heat dissipation coefficient) indicating the heat dissipation property of the battery 21 based on the information including the charging current after the change in the output setting value, the voltage of the battery 21, and the temperature of the battery 21. Thereby, the charging control means 1A can predict the temperature of the battery 21 when a predetermined charging current is allowed to flow, based on the temperature model parameters. As a result, when the battery 21 is charged, the output setting value of the charger 10 can be adjusted so as to inhibit the temperature rise after predicting the temperature rise of the battery 21. For example, when an excessive temperature rise due to the charging of the battery 21 is predicted, the charging control means 1A sets the output setting value of the charger 10 to be low, so that deterioration of the battery 21 can be inhibited.

According to the third embodiment, at the time of estimating the voltage model parameters (particularly, the dependency of the internal resistance on the SOC) of the battery 21, the charging control means 1A changes the output setting value of the charger 10 so that the range of increase in the temperature of the battery 21 during charging is relatively small. This enables the voltage model parameters to be estimated with high accuracy. On the other hand, at the time of estimating the temperature model parameters, the charging control means 1A changes the output setting value of the charger 10 so that the temperature rise range of the battery 21 during charging is relatively large. This enables the temperature model parameters to be estimated with high accuracy, and as a result, the internal resistance corresponding to each SOC can be estimated with high accuracy while the temperature rise of the battery 21 can be inhibited.

<<Fourth Embodiments

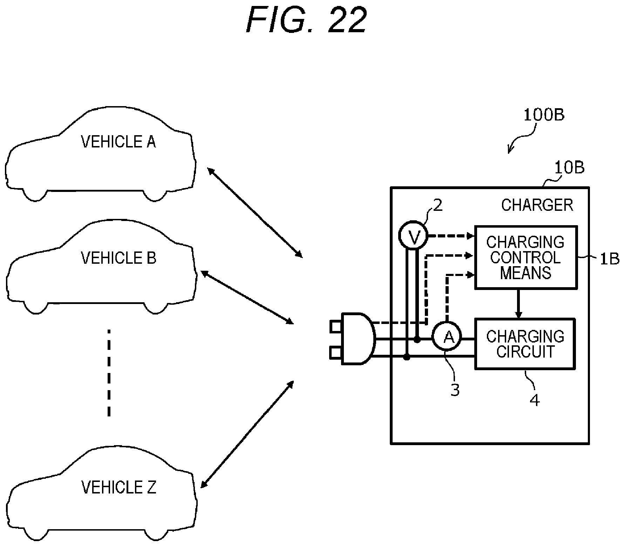

The fourth embodiment differs from the first embodiment in that a charging control means 1B (cf. Fig. 22) changes an output setting value of a charger 10B (cf. Fig. 22) in accordance with the type of vehicle. Note that the other points are similar to those of the first embodiment. Therefore, parts different from those of the first embodiment will be described, and description of overlapping parts will be omitted.

Fig. 22 is a configuration diagram including a charging control system 100B according to the fourth embodiment.

A plurality of different types of vehicles A to Z are assumed to be connected to the charger 10B shown in Fig. 22. For example, when the vehicle A is connected to the charger 10B, the vehicle A transmits, to the charger 10B, information including the vehicle ID of the vehicle A as well as the charging current command value, the SOC, and the charging voltage upper-limit value. On the other hand, the charger 10B transmits to the vehicle A the detection values of the chargeable current and the current and the actual voltage being supplied. Note that the same applies to a case where any of the different types of vehicles B to Z is connected to the charger 10B.

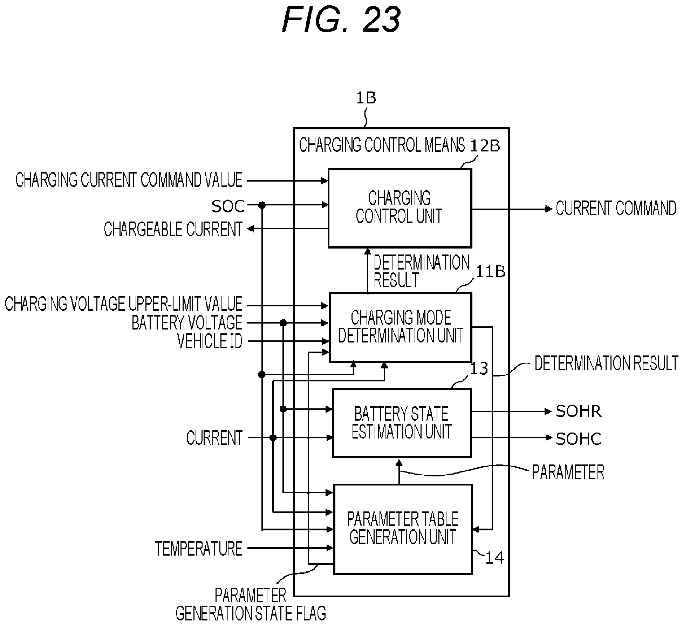

Fig. 23 is the functional block diagram of the charging control means 1B included in the charging control system.

As shown in Fig. 23, a vehicle ID is input to a charging mode determination unit 11B of the charging control means 1B in addition to the charging voltage upper-limit value and the voltage (battery voltage) of the battery 21. The vehicle ID is identification information of a vehicle connected to the charger 10B. Note that, even when the vehicle ID is not transmitted to the charger 10B (cf. Fig. 22), for example, a vehicle operation management system (not shown) may separately provide an ID of a vehicle used for delivery, and at the time of charging, a driver or the like may transmit the vehicle ID to the charger 10B (cf. Fig. 22) using a terminal (not shown) or the like.

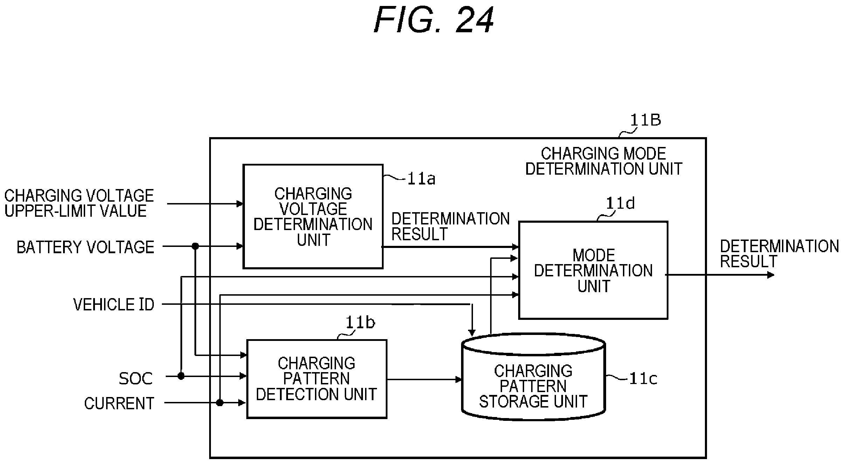

Fig. 24 is the functional block diagram of the charging mode determination unit 11B included in the charging control means.

The charging mode determination unit 11B shown in Fig. 24 has a function of determining the charging mode of the vehicle. As shown in Fig. 24, the charging mode determination unit 11B includes a charging voltage determination unit 11a, a charging pattern detection unit 11b, a charging pattern storage unit 11c, and a mode determination unit 11d.

The charging voltage determination unit 11a determines whether or not the voltage of the battery 21 has reached the charging voltage upper-limit value. The determination result of the charging voltage determination unit 11a is output to the mode determination unit 11d.

The charging pattern detection unit 11b detects the feature of the charging pattern of the vehicle based on the voltage, the current, and the SOC of the battery 21. Note that the "charging pattern" includes, for example, feature quantities such as a current value during CC charging, as well as a current switching voltage and a current switching SOC at the time of switching the current value, an upper-limit voltage, and an upper-limit SOC.

In the charging pattern storage unit 11c, the feature quantities of the charging pattern detected by the charging pattern detection unit 11b are stored in association with the vehicle ID. The mode determination unit 11d determines the charging mode, based on the feature quantities of the charging pattern stored in the charging pattern storage unit 11c and the voltage, the current, and the SOC of the battery 21, in addition to the determination result of the charging voltage determination unit 11a. For example, the mode determination unit 11d determines whether the charging mode is CC charging or other than CC charging. The determination result of the mode determination unit 11d is output to a charging control unit 12B (cf. Fig. 23).

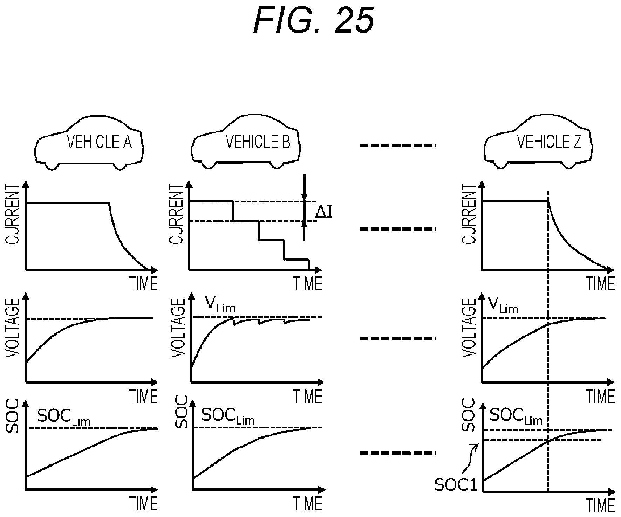

Fig. 25 is an explanatory diagram related to a charging method for each of different types of vehicles.

Fig. 25 shows waveforms of current, voltage, and SOC during the charging of the battery 21 for each of different types of vehicles A, B, ..., Z. For the vehicle A, the current waveform shows a charging waveform by so-called CCCV charging. CC charging is performed at a constant current until the voltage of the battery 21 reaches a predetermined charging voltage upper-limit value $V_{Lim}$, and then CV charging is performed in which the voltage is made constant and the current is decreased. This charging method is preset in the vehicle A.

In the vehicle B, the following processing is repeated: charging is performed at a constant current from the start of charging; the charging current is decreased by a predetermined amount when the voltage of the battery 21 reaches the predetermined charging voltage upper-limit value $V_{Lim}$; and charging is performed at a constant-current value after the decrease until the voltage of the battery 21 reaches the charging voltage upper-limit value $V_{Lim}$ again. Such a charging method is called step charging.

In the vehicle Z, the charging current is decreased before the voltage of the battery 21 reaches the charging voltage upper-limit value $V_{Lim}$. That is, in the vehicle Z, a current switching SOC (value SOC1) lower than an upper limit $SOC_{Lim}$ is provided, and when the voltage of the battery 21 reaches the current switching SOC (value SOC1), charging is performed until the voltage reaches the upper limit $SOC_{Lim}$ while the charging current is decreased. Additionally, although not shown, a current switching voltage serving as a threshold at the time of decreasing the charging current may be set instead of the current switching SOC1 described above. As described above, various charging methods are used depending on the type of vehicle.

Therefore, in the fourth embodiment, as the features of the charging waveform of each type of vehicle, the current value during CC charging, as well as the current switching voltage, the current switching SOC, the upper-limit SOC, the upper-limit voltage, and the like, is extracted from the actual charging waveforms and made into a database. Such information is stored into the charging pattern storage unit 11c (cf. Fig. 24) in association with the vehicle ID as the feature quantities of the charging pattern.

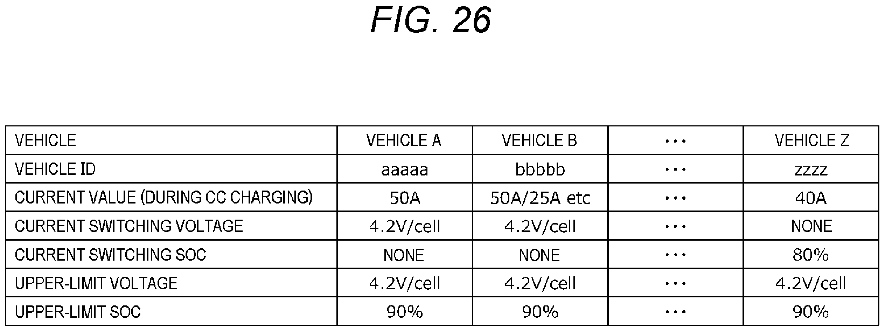

Fig. 26 is an explanatory diagram showing an example of the feature quantity of the charging pattern stored in the charging pattern storage unit.

In the example of Fig. 26, the current value during CC charging, the current switching voltage, the current switching SOC, the upper-limit voltage, and the upper-limit SOC of the vehicle A are stored as a database in the charging pattern storage unit 11c (cf. Fig. 24) in association with the vehicle ID. That is, the feature quantity of the charging pattern of the battery 21 is a threshold at the time of switching from constant-current charging (or constant-power charging) to another charging mode, and the threshold is at least one of the charging current, the voltage of the battery 21, and the state of charge. Every time a new type of vehicle is charged, the charging control means 1B (cf. Fig. 23) extracts the feature quantities of the charging pattern of the vehicle, and stores the feature quantities into the charging pattern storage unit 11c (cf. Fig. 24) in association with the vehicle ID. When the information corresponding to the vehicle ID has already been stored in the charging pattern storage unit 11c, the charging control means 1B performs the charging control of the battery 21 based on this information.

The mode determination unit 11d shown in Fig. 24 determines whether or not the current charging mode is CC charging (i.e., a condition suitable for the change in the output setting of the charger 10B), based on the information stored in the charging pattern storage unit 11c, in addition to the determination result of the charging voltage determination unit 11a. That is, the mode determination unit 11d of the charging control means 1B determines whether or not the charging mode is constant-current charging (or constant-power charging), based on a charging pattern that is a time-series change in at least one of the charging current, the voltage of the battery 21, and the SOC (state of charge). For example, in the case of the vehicle Z (cf. Fig. 25), the current switching SOC (value SOC1) is set. Thus, in the case of the vehicle Z, in addition to the determination result as to whether or not the voltage of the battery 21 is lower than the charging voltage upper-limit value, the SOC of the battery 21 being lower than the current switching SOC is the determination condition for CC charging.

The charging control unit 12B (cf. Fig. 23) changes the output setting of the charger 10B based on the determination result of the charging mode determination unit 11B, charges the battery 21, and estimates the SOHR and SOHC of the battery 21. The charging control unit 12B may generate a parameter table indicating a correspondence between the SOC and the temperature of the battery 21 and the internal resistance value of the battery 21. Note that the estimation of the SOHR and SOHC of the battery 21 and the generation of the parameter table are similar to those described in the first to third embodiments, and hence the detailed description thereof will be omitted.

<Effects>

According to the fourth embodiment, the charging control means 1B detects the feature quantities of the charging pattern corresponding to the type of vehicle and creates a database, thereby enabling the appropriate setting of the timing for the change in the output setting value corresponding to the charging pattern of each vehicle. Further, for example, even when the current starts to decrease before the SOC of the battery 21 reaches the upper-limit $SOC_{Lim}$ as in the vehicle Z (cf. Fig. 24), the charging mode can be appropriately determined.

<<Modifications>>

Although the charging control system 100 and the like according to the present invention have been described in each embodiment, the present invention is not limited to these descriptions, and various modifications can be made.

For example, in each embodiment, the processing in which the charging control means 1 changes the output setting value of the charger 10 when the charging mode is constant-current charging (CC charging) has been described, but the present invention is not limited thereto. That is, each embodiment can also be applied to constant-power charging instead of constant-current charging. Note that the constant-power charging is a method for charging the battery 21 while maintaining the charging power.

In each embodiment, the case where the charging control means 1 changes the output setting value of the charger 10 and calculates the internal resistance value and the OCV (open circuit voltage) of the battery 21 has been described, but the present invention is not limited thereto. For example, the charging control means 1 may calculate at least one of state quantities that are the internal resistance value and the open circuit voltage (OCV) of the battery based on information including the charging current after the change in the output setting value and the voltage of the battery 21.

In each embodiment, the case where the charging control means 1 sets the charging current to zero midway through the CC charging and temporarily stops charging has been described, but the present invention is not limited thereto. For example, the charging control means 1 may change the charging current from a predetermined value to a value smaller than this predetermined value (a value larger than zero) midway through the CC charging.

In each embodiment, the processing in which the charging control means 1 estimates the SOHR and SOHC of the battery 21 based on the change amounts of the current and voltage at the falling timing of the charging current during CC charging has been described, but the present invention is not limited thereto. That is, the charging control means 1 may estimate the SOHR and SOHC of the battery 21 based on the change amounts of the current and voltage at the rising timing of the charging current during CC charging.

In each embodiment, the case where the charging current is controlled using the charger 10 has been described, but the present invention can also be applied to a bidirectional charger capable of discharging from the vehicle 20 to the charger 10 in addition to charging from the charger 10 to the vehicle 20. In such a case, the charging control means 1 may discharge the battery 21 of the vehicle 20 by changing the output setting value in the discharging direction, and acquire the current and voltage at that time. The internal resistance of the battery 21 may have different values at the time of charging and discharging. Thus, when discharging is possible, the internal resistance of the battery 21 can be accurately calculated by acquiring the internal resistance value on the discharge side together.

The embodiments may be appropriately combined. For example, the first embodiment and the second embodiment may be combined, the charging control means 1 may calculate the resistance component Ro not depending on the energization time and the resistance component Rp depending on the energization time with respect to the internal resistance of the battery 21, and the SOHR and SOHC of the battery 21 may be estimated based on information including these resistance components Ro, Rp. Additionally, a combination of the second embodiment and the fourth embodiment and a combination of the third embodiment and the fourth embodiment are also possible.

In each embodiment, the case where the vehicle 20 is an electric car or a hybrid car has been described, but the present invention can also be applied to a two-wheeled vehicle or a three-wheeled vehicle driven by electricity. In addition to the vehicle 20, each embodiment can be applied to non-electrified railway vehicles as well as water, land, and air "mobile vehicles" such as ships, aircraft, and agricultural machines. The aircraft described above also includes unmanned aircraft and drones.

The processing executed by the charging control means 1 or the like may be executed as a predetermined program of the computer. The program described above can be provided via a communication line, or can be distributed by being written in a recording medium such as a compact disc read-only memory (CD-ROM).

Each embodiment has been described in detail to describe the present invention in an easy-to-understand manner, and is not necessarily limited to those having all the described configurations. It is possible to add, delete, and replace other configurations for a part of the configuration of the embodiment. The mechanisms and configurations described above are illustrated as those considered necessary for the description, and not all mechanisms and configurations in a product are necessarily illustrated.

Reference Signs List

100, 100B charging control system
10, 10B charger
1, 1A, 1B charging control means
2 voltage measurement means
3 current measurement means
4 charging circuit
11, 11B charging mode determination unit
12, 12A charging control unit
13, 13A battery state estimation unit
14, 14A parameter table generation unit
15 parameter table
20 vehicle (mobile vehicle)
21 battery

**Claims**

1. A charging control system comprising

   a charging control means that controls charging of a battery of a mobile vehicle by a charger on a basis of a charging current command value or a charging power command value transmitted from the mobile vehicle to the charger,
   wherein when a charging mode is constant-current charging or constant-power charging, the charging control means makes a change in an output setting value of the charger to change a charging current of the battery.

2. The charging control system according to claim 1, wherein when the charging mode is the constant-current charging or the constant-power charging, as the change in the output setting value of the charger, the charging control means lowers the output setting value midway through charging of the battery and then increases the output setting value.

3. The charging control system according to claim 1, wherein when the charging mode is the constant-current charging or the constant-power charging, the charging control means lowers the output setting value to make a chargeable current in the charger smaller than the charging current command value immediately before the change in the output setting value.

4. The charging control system according to claim 1, wherein the charging control means determines the constant-current charging or the constant-power charging when a voltage of the battery during charging is lower than a charging voltage upper-limit value transmitted from the mobile vehicle to the charger.

5. The charging control system according to claim 1, wherein the charging control means intermittently charges the battery when the charging mode is the constant-current charging or the constant-power charging.

6. The charging control system according to claim 1, wherein the charging control means calculates at least one of state quantities that are an internal resistance value and an open circuit voltage of the battery on a basis of information including a charging current and a voltage of the battery after the change in the output setting value.

7. The charging control system according to claim 6, wherein

   a plurality of thresholds with different magnitudes are each preset as a state of charge of the battery, and
   when the charging mode of the battery is the constant-current charging or the constant-power charging, the charging control means makes a change in the output setting value every time the state of charge of the battery reaches one of the plurality of the thresholds, calculates the state quantity, and associates the state quantity with the state of charge of the battery.

8. The charging control system according to claim 6, wherein

   a plurality of thresholds with different magnitudes are each preset as a temperature of the battery, and
   when the charging mode of the battery is the constant-current charging or the constant-power charging, the charging control means makes a change in the output setting value every time the temperature of the battery reaches one of the plurality of the thresholds, calculates the state quantity, and associates the state quantity with the temperature of the battery.

9. The charging control system according to claim 6, wherein the charging control means calculates, as the internal resistance value of the battery, a first resistance component that changes depending on an energization time of the battery and a second resistance component independent of the energization time of the battery.

10. The charging control system according to claim 1, wherein the charging control means calculates at least one of parameters indicating a heat capacity of the battery and a heat dissipation property of the battery on a basis of information including a charging current after the change in the output setting value, a voltage of the battery, and a temperature of the battery.

11. The charging control system according to claim 1, wherein

    the charging control means generates a first database including an open circuit voltage and an internal resistance value of the battery on a basis of information including a charging current after the change in the output setting value and a voltage of the battery,

at a time of changing the battery again after the generation of the first database, the charging control means changes the output setting value, and generates a second database including at least one of parameters indicating a heat capacity of the battery and a heat dissipation property of the battery on a basis of the charging current after the change in the output setting value, the voltage of the battery, and information in the first database, and

a charging current when the output setting value is increased at a time of generating the first database is smaller than a charging current when the output setting value is increased at a time of generating the second database.

12. The charging control system according to claim 1, wherein the charging control means determines whether the charging mode is the constant-current charging or the constant-power charging on a basis of a charging pattern that is a time-series change in at least one of a charging current, a voltage of the battery, and a state of charge.

13. The charging control system according to claim 12, wherein a feature quantity of the charging pattern is a threshold at a time of switching from the constant-current charging or the constant-power charging to another charging mode, and the threshold is at least one of the charging current, the voltage of the battery, and the state of charge.

14. A charging control method comprising:

controlling charging of a battery of a mobile vehicle by a charger on a basis of a charging current command value or a charging power command value transmitted from the mobile vehicle to the charger; and
making a change in an output setting value of the charger to change a charging current of the battery when a charging mode is constant-current charging or constant-power charging.

15. A program for causing a computer to execute the charging control method according to claim 14.

# FIG. 1

EP 4 354 689 A1

# FIG. 2

# FIG. 3

CHARGING CONTROL UNIT — 12

CHARGING CURRENT COMMAND VALUE → CHARGING CURRENT DETERMINATION UNIT (12b)

CHARGEABLE CURRENT ←

SOC →

OUTPUT SETTING VALUE

CHARGER OUTPUT SETTING CHANGING UNIT (12a)

→ CURRENT COMMAND

DETERMINATION RESULT ↑

EP 4 354 689 A1

# FIG. 4

```
                    START

No    S101
  ┌── CONSTANT CURRENT CHARGING MODE?
  │              Yes
  │              ↓  ←──────────────────────────┐
  │    TIMING FOR CHANGE IN OUTPUT SETTING?  No │
  │              Yes          S102              │
  │              ↓                              │
  │    CHANGE OUTPUT SETTING    S103            │
  │              ↓                              │
  │    CHANGE CHARGEABLE CURRENT   S104         │
  │              ↓                              │
  │                              S105           │
  │    CHARGEABLE CURRENT                No     │
  │    ≥ CHARGING CURRENT COMMAND VALUE? ───┐   │
  │         Yes        S106          S107   │   │
  │          ↓                        ↓     │   │
  │    CC CHARGING BASED ON    CC CHARGING AT
  │    CURRENT COMMAND VALUE   CHARGEABLE CURRENT VALUE
  │          ↓                        │
  │          ├────────────────────────┘
  │          ↓
  │    ESTIMATE BATTERY STATE    S108
  │          ↓
  └──────────┤
             ↓
            END
```

EP 4 354 689 A1

## FIG. 5

## FIG. 6

EP 4 354 689 A1

# FIG. 7

$$Q = \int I dt$$

# FIG. 8

EP 4 354 689 A1

# FIG. 9

- 12A
- CHARGING CONTROL UNIT
- 12Ab
- CHARGING CURRENT COMMAND VALUE → CHARGING CURRENT DETERMINATION UNIT
- OUTPUT SETTING VALUE
- CHARGEABLE CURRENT ←
- CHARGER OUTPUT SETTING CHANGING UNIT
- 12Aa
- SOC →
- CURRENT COMMAND →
- PARAMETER GENERATION STATE FLAG
- DETERMINATION RESULT

# FIG. 10

PARAMETER TABLE GENERATION UNIT — 14

DETERMINATION RESULT → PARAMETER GENERATION EXECUTION DETERMINATION UNIT (14a)

BATTERY VOLTAGE, CURRENT, TEMPERATURE, SOC → VOLTAGE MODEL PARAMETER ESTIMATION UNIT (14b)

VOLTAGE MODEL PARAMETER DB (14c) → PARAMETER

PARAMETER GENERATION STATE FLAG

# FIG. 11

# FIG. 12

## FIG. 13

| SOC [%] \ TEMPERATURE [degC] | 30 | 40 | · · · | 90 |
|---|---|---|---|---|
| -10 | aa | ab | · · · | ai |
| 0 | ba | bb | · · · | bi |
| : | : | : | | : |
| 30 | ya | yb | · · · | yi |
| 50 | za | zb | · · · | zi |

# *FIG. 14A*

```
                          ( START )
                              |
                              v
 No          CONSTANT CURRENT CHARGING MODE?          S201
 <---------                   |
    |                        Yes
    v                         |
  ( A )                       v
              PARAMETER GENERATION STATE FLAG F = 1?   S202    No
                              |                       -------------> ( C )
                             Yes
                              |
                              v
              TIMING FOR CHANGE IN OUTPUT SETTING?            No
              <--------                               -----------
                              |                         S203
                             Yes
                              |
                              v
              CHANGE OUTPUT SETTING          S204
                              |
                              v
              CHANGE CHARGEABLE CURRENT       S205
                              |
                              v
              CHARGEABLE CURRENT                        S206    No
              ≥ CHARGING CURRENT COMMAND VALUE?      ----------
                              |                              |
                             Yes                             |
                              |            S207              |  S208
                              v                             v
              CC CHARGING BASED ON            CC CHARGING AT
              CURRENT COMMAND VALUE           CHARGEABLE CURRENT VALUE
                              |                             |
                              v <----------------------------
                           ( B )
```

# FIG. 14B

B

C

ESTIMATE VOLTAGE MODEL PARAMETERS — S209

GENERATION OF PARAMETER TABLE HAS BEEN COMPLETED? — S210

No

Yes

PARAMETER GENERATION STATE FLAG F = 0 — S211

READ PARAMETERS CORRESPONDING TO SOC/TEMPERATURE — S213

ESTIMATE BATTERY STATE — S212

A

RETURN

## FIG. 15

## FIG. 16

EP 4 354 689 A1

## FIG. 17

## FIG. 18A

```
                        START

            No   ┌─────────────────────────────┐ S301
          ┌──────┤ CONSTANT CURRENT CHARGING MODE? │
          │      └─────────────────────────────┘
        ┌───┐           Yes │
        │ D │               ▼
        └───┘      ┌──────────────────────────┐ S302   No
               ┌───┤  GENERATION STATE FLAG F=2?  ├────────────┐
               │   └──────────────────────────┘            │
               │        Yes │                              ▼
               │            │              ┌────────────────────────┐ S308   No
               │            │          ┌───┤ GENERATION STATE FLAG F=1? ├──────┐
               │            │          │   └────────────────────────┘       │
               │            ▼          │        Yes │                       ▼
               │   ┌──────────────┐ S303│   ┌──────────────┐ S309       ┌───┐
               │   │  CHARGE IN FIRST │  │   │ CHARGE IN SECOND │          │ G │
               │   │ CHARGING PATTERN │  │   │ CHARGING PATTERN │          └───┘
               │   └──────────────┘     │   └──────────────┘
               │          ▼ S304            │          ▼ S310
               │   ┌──────────────┐         │   ┌──────────────┐
               │   │ ESTIMATE VOLTAGE │      │   │ ESTIMATE TEMPERATURE │
               │   │ MODEL PARAMETER │       │   │  MODEL PARAMETER │
               │   └──────────────┘          │   └──────────────┘
               │ No       ▼ S305             │ No       ▼ S311
               ├───┤ GENERATION OF VOLTAGE MODEL │  ├───┤ GENERATION OF TEMPERATURE MODEL │
               │   │ PARAMETER HAS BEEN COMPLETED? │ │ PARAMETER HAS BEEN COMPLETED? │
               │        Yes │ S306            │        Yes │ S312
               │   ┌──────────────────────┐   │   ┌──────────────────────┐
               │   │ GENERATION STATE FLAG F=1 │ │ GENERATION STATE FLAG F=0 │
               │   └──────────────────────┘   │   └──────────────────────┘
               │            ▼                  │            ▼
              ┌───┐                           ┌───┐
              │ E │                           │ F │
              └───┘                           └───┘
```

# FIG. 18B

E    F    G

S313

READ PARAMETERS CORRESPONDING
TO SOC/TEMPERATURE

ESTIMATE BATTERY STATE    S307

D

RETURN

FIG. 19

EP 4 354 689 A1

FIG. 20

FIG. 21

FIG. 22

# FIG. 23

## FIG. 24

EP 4 354 689 A1

FIG. 25

## FIG. 26

| VEHICLE | VEHICLE A | VEHICLE B | · · · | VEHICLE Z |
|---|---|---|---|---|
| VEHICLE ID | aaaaa | bbbbb | · · · | zzzz |
| CURRENT VALUE (DURING CC CHARGING) | 50A | 50A/25A etc | · · · | 40A |
| CURRENT SWITCHING VOLTAGE | 4.2V/cell | 4.2V/cell | · · · | NONE |
| CURRENT SWITCHING SOC | NONE | NONE | · · · | 80% |
| UPPER-LIMIT VOLTAGE | 4.2V/cell | 4.2V/cell | · · · | 4.2V/cell |
| UPPER-LIMIT SOC | 90% | 90% | · · · | 90% |

EP 4 354 689 A1

## FIG. 27

EP 4 354 689 A1

## FIG. 28

## INTERNATIONAL SEARCH REPORT

| International application No. |
| --- |
| **PCT/JP2022/017783** |

**A. CLASSIFICATION OF SUBJECT MATTER**

*H02J 7/00*(2006.01)i; *H02J 7/10*(2006.01)i; *B60L 50/60*(2019.01)i; *B60L 58/12*(2019.01)i; *B60L 53/14*(2019.01)i;
*B60L 53/30*(2019.01)i; *B60L 53/62*(2019.01)i; *B60L 53/66*(2019.01)i; *H01M 10/44*(2006.01)i; *H01M 10/48*(2006.01)i
FI: H02J7/10 A; H02J7/10 B; H02J7/10 H; H02J7/00 P; H01M10/44 Q; H01M10/48 P; H01M10/48 301; B60L50/60;
B60L53/14; B60L53/30; B60L53/62; B60L53/66; B60L58/12

According to International Patent Classification (IPC) or to both national classification and IPC

**B. FIELDS SEARCHED**

Minimum documentation searched (classification system followed by classification symbols)

H02J7/00; H02J7/10; B60L50/60; B60L58/12; B60L53/14; B60L53/30; B60L53/62; B60L53/66; H01M10/44; H01M10/48

Documentation searched other than minimum documentation to the extent that such documents are included in the fields searched

Published examined utility model applications of Japan 1922-1996
Published unexamined utility model applications of Japan 1971-2022
Registered utility model specifications of Japan 1996-2022
Published registered utility model applications of Japan 1994-2022

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
| --- | --- | --- |
| Y | JP 2020-036393 A (YAMAHA MOTOR CO LTD) 05 March 2020 (2020-03-05) paragraphs [0017]-[0049], [0076], fig. 1-6 | 1-6, 12-15 |
| A | | 7-11 |
| Y | JP 09-084277 A (NISSAN MOTOR CO LTD) 28 March 1997 (1997-03-28) paragraphs [0016]-[0020], fig. 1-2 | 1-6, 12-15 |
| A | | 7-11 |
| Y | JP 2013-240153 A (WAVE TECHNOLOGY INC) 28 November 2013 (2013-11-28) paragraph [0051] | 5 |

☐ Further documents are listed in the continuation of Box C.  ☑ See patent family annex.

| * | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
| --- | --- |
| **10 May 2022** | **24 May 2022** |

| Name and mailing address of the ISA/JP | Authorized officer |
| --- | --- |
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (January 2015)

INTERNATIONAL SEARCH REPORT
Information on patent family members

International application No.

**PCT/JP2022/017783**

| Patent document cited in search report | | | Publication date (day/month/year) | Patent family member(s) | Publication date (day/month/year) |
|---|---|---|---|---|---|
| JP | 2020-036393 | A | 05 March 2020 | (Family: none) | |
| JP | 09-084277 | A | 28 March 1997 | (Family: none) | |
| JP | 2013-240153 | A | 28 November 2013 | (Family: none) | |

Form PCT/ISA/210 (patent family annex) (January 2015)

**REFERENCES CITED IN THE DESCRIPTION**

**Patent documents cited in the description**

- JP 2020115715 A